(19)

**Europäisches Patentamt**
**European Patent Office**
**Office européen des brevets**

(11)  **EP 4 686 116 A1**

(12)  # EUROPEAN PATENT APPLICATION
published in accordance with Art. 153(4) EPC

(43) Date of publication:
**28.01.2026 Bulletin 2026/05**

(21) Application number: **23931270.5**

(22) Date of filing: **04.04.2023**

(51) International Patent Classification (IPC):
***H04B 10/60*** (2013.01)

(52) Cooperative Patent Classification (CPC):
**H04B 10/60**

(86) International application number:
**PCT/CN2023/086189**

(87) International publication number:
**WO 2024/207197 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **ZHANG, Jianan**
  **Shenzhen, Guangdong 518129 (CN)**
- **LIANG, Dong**
  **Shenzhen, Guangdong 518129 (CN)**
- **ZHANG, Junping**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54)  **PHOTORECEIVER, OPTICAL RECEIVER, OPTICAL COMMUNICATION SYSTEM AND OPTICAL RECEIVING METHOD**

(57)  This application relates to the field of optical technologies, and in particular, to a photoreceiver, an optical receiver, an optical communication system, and an optical receiving method. The photoreceiver includes an optical receiving surface and N1 first photoelectric detector PD arrays. The optical receiving surface includes N1 optical receiving regions, and the N1 first PD arrays are respectively provided in the N1 optical receiving regions. Any optical receiving region is in a shape of an axisymmetric curved quadrangle, an axisymmetric curved pentagon, an axisymmetric curved hexagon, a sphere, or an ellipsoid; or an axisymmetric quadrangle, an axisymmetric pentagon, or an axisymmetric hexagon; or a distorted axisymmetric quadrangle or a distorted axisymmetric hexagon. N1 is a positive integer greater than or equal to 2. Each first PD array may be configured to perform photoelectric conversion on received optical energy, and output a first electrical parameter obtained through the conversion. The photorecei-ver provided in this application has a large communica-tion bandwidth, and is highly applicable and practicable.

FIG. 1

EP 4 686 116 A1

**Description**

**TECHNICAL FIELD**

This application relates to the field of optical technologies, and in particular, to a photoreceiver, an optical receiver, an optical communication system, and an optical receiving method.

**BACKGROUND**

With continuous development of communication technologies and emergence of actual application requirements, an integrated sensing and communication (integrated sensing and communication, ISAC) system is proposed gradually. The integrated sensing and communication system is mainly a system capable of sensing attributes and states of all services, networks, users, terminals, and environment objects. The integrated sensing and communication system needs to implement high-precision angle sensing and high-speed communication, and sensing performance of light is better than that of a conventional radio frequency band. Therefore, an optical wireless communication (optical wireless communication, OWC) technology gradually becomes one of important technical foundations of the integrated sensing and communication system.

To implement all of a wide field-of-view (field-of-view, FOV), high-precision angle of arrival (angle of arrival, AOA) estimation, and a high fill ratio at an optical receiving side, an optical receiver included in an existing wireless optical communication system used in an integrated sensing and communication system needs to receive signal light via a high-resolution photoelectric detector (photoelectric detector, PD) array including a large quantity of PDs. However, an excessively large quantity of PDs included in the PD array used by the existing optical receiver leads to a small communication bandwidth of the optical receiver. In addition, the integrated sensing and communication system needs a large communication bandwidth. Therefore, the existing optical receiver is not applicable to the integrated sensing and communication system that is based on the wireless optical communication system.

**SUMMARY**

To resolve the foregoing problem, this application provides a photoreceiver, an optical receiver, an optical communication system, and an optical receiving method. A communication bandwidth of the photoreceiver is large, and a communication bandwidth of an optical receiver that is based on the photoreceiver is also large. This facilitates application of the optical receiver in an integrated sensing and communication system.

According to a first aspect, this application provides a photoreceiver. The photoreceiver includes an optical receiving surface and N1 first photoelectric detector PD arrays provided on the optical receiving surface. The optical receiving surface includes N1 optical receiving regions, and the N1 first PD arrays are respectively provided in the N1 optical receiving regions. Each of the N1 first PD arrays includes a plurality of connected PDs. Any optical receiving region in the N1 optical receiving regions is in a shape of an axisymmetric curved quadrangle, an axisymmetric curved pentagon, an axisymmetric curved hexagon, a sphere, or an ellipsoid, the any optical receiving region is in a shape of an axisymmetric quadrangle, an axisymmetric pentagon, or an axisymmetric hexagon, or the any optical receiving region is in a shape of a distorted axisymmetric quadrangle or a distorted axisymmetric hexagon. N1 is a positive integer greater than or equal to 2. Each of the N1 first PD arrays is configured to perform, via a plurality of included PDs, photoelectric conversion on received optical energy, and output a first electrical parameter obtained through the conversion.

In the foregoing implementation, the optical receiving surface of the photoreceiver is divided into a plurality of optical receiving regions, and a corresponding first PD array is provided in each optical receiving region. In addition, any optical receiving region in the foregoing plurality of optical receiving regions is set in a shape of an axisymmetric curved quadrangle, an axisymmetric curved pentagon, an axisymmetric curved hexagon, a sphere, or an ellipsoid; or an axisymmetric quadrangle, an axisymmetric pentagon, or an axisymmetric hexagon; or a distorted axisymmetric quadrangle or a distorted axisymmetric hexagon. In this way, PDs included in a first PD array provided in each optical receiving region are distributed uniformly, so that each first PD array includes a small quantity of PDs, and a light spot formed by signal light on the optical receiving surface 10 falls only on a first PD array including a small quantity of PDs. The photoreceiver has a large communication bandwidth. The photoreceiver provided in this application is used in an optical receiver, so that a communication bandwidth of the optical receiver can be effectively increased, to improve applicability and practicability of the optical receiver in an integrated sensing and communication system.

With reference to the first aspect, in a feasible implementation, the optical receiving surface is a continuous quadric surface. Each of the N1 optical receiving regions is in a shape of an axisymmetric curved pentagon, and N1 is greater than or equal to 6. Alternatively, each of the N1 optical receiving regions is in a shape of an axisymmetric curved hexagon, and N1 is greater than or equal to 7.

In the foregoing implementation, the optical receiving surface is designed as a structure of the continuous quadric surface, and each optical receiving region is designed in a shape of the axisymmetric curved pentagon or the axisymmetric curved hexagon. Impact of aberration on receiving performance of the photoreceiver can be reduced by designing the optical receiving surface as a curved surface. In addition, design of each optical receiving region in a shape of the axisymmetric curved pentagon or the axisymmetric curved hexagon can increase the communication bandwidth of the photoreceiver and facilitate design and production of the optical receiving surface.

With reference to the first aspect, in a feasible implementation, the optical receiving surface is a continuous quadric surface. The N1 optical receiving regions include M1 first optical receiving regions and M2 second optical receiving regions. Each of the M1 first optical receiving regions is in a shape of an axisymmetric curved pentagon, and each of the M2 second optical receiving regions is in a shape of an axisymmetric curved hexagon. M1 is a positive integer greater than or equal to 1, and M2 is a positive integer greater than or equal to 5.

In the foregoing implementation, the optical receiving surface is designed as a structure of the continuous quadric surface, and the optical receiving surface includes the first optical receiving region in a shape of the curved pentagon and the second optical receiving region in a shape of the curved hexagon. This can increase the communication bandwidth of the photoreceiver, reduce impact of aberration on receiving performance of the photoreceiver, and further facilitate design and production of the optical receiving surface.

With reference to the first aspect, in a feasible implementation, the optical receiving surface is a continuous quadric surface. The N1 optical receiving regions include one third optical receiving region and M3 fourth optical receiving regions. An optical axis of the optical receiving surface passes through the third optical receiving region, and the third optical receiving region is in a shape of a sphere or an ellipsoid. Each of the M3 fourth optical receiving regions is in a shape of a curved quadrangle. M3 is a positive integer greater than or equal to 2.

In the foregoing implementation, the optical receiving surface is designed as a structure of the continuous quadric surface, and the optical receiving surface includes the third optical receiving region in a shape of the sphere or the ellipsoid and M3 optical receiving regions in a shape of the curved quadrangle. This can increase the communication bandwidth of the photoreceiver, reduce impact of aberration on receiving performance of the photoreceiver, and further facilitate design and production of the optical receiving surface.

With reference to the first aspect, in a feasible implementation, M3 is greater than or equal to 5. The M3 fourth optical receiving regions form at least two curved annular regions around the optical axis. Each of the at least two curved annular regions includes at least two fourth optical receiving regions. An inner edge of one of the at least two curved annular regions is connected to an edge of the third optical receiving region. In any two connected curved annular regions in the at least two curved annular regions, a quantity of fourth optical receiving regions included in a curved annular region close to the third optical receiving region is less than a quantity of fourth optical receiving regions included in a curved annular region far from the third optical receiving region.

In the foregoing implementation, when the optical receiving surface includes the third optical receiving region in a shape of the sphere or the ellipsoid and the M3 fourth optical receiving regions in a shape of the curved quadrangle, the M3 fourth optical receiving regions in a shape of the curved quadrangle form the at least two curved annular regions by using the third optical receiving region as a center, where centers of the curved annular regions are on the optical axis of the optical receiving surface, and a larger curved annular region includes a larger quantity of fourth optical receiving regions. This structure can increase the communication bandwidth of the photoreceiver, reduce the impact of the aberration on the receiving performance of the photoreceiver, and further facilitate the design and production of the optical receiving surface.

With reference to the first aspect, in a feasible implementation, the optical receiving surface is a stitched curved surface and is formed by stitching N1 first planes. One of the N1 first planes is one of the N1 optical receiving regions, and any optical receiving region in the N1 optical receiving regions is in a shape of an axisymmetric quadrangle, an axisymmetric pentagon, or an axisymmetric hexagon.

In the foregoing implementation, the optical receiving surface is designed as a structure of the stitched curved surface, and each stitched plane is one optical receiving region in which one first PD array is provided. In this way, the communication bandwidth of the photoreceiver can be increased, impact of aberration on receiving performance of the photoreceiver can be avoided, and complexity of design and production of the optical receiving surface can be further reduced.

With reference to the first aspect, in a feasible implementation, the optical receiving surface is a second plane, and each of the N1 optical receiving regions is in a shape of an axisymmetric quadrangle. Alternatively, each of the N1 optical receiving regions is in a shape of an axisymmetric hexagon.

In the foregoing implementation, the optical receiving surface is designed as a plane including a plurality of optical receiving regions in a shape of an axisymmetric quadrangle or an axisymmetric hexagon. In this way, the communication bandwidth of the photoreceiver can be increased, and complexity of design and production of the optical receiving surface can be reduced.

With reference to the first aspect, in a feasible implementation, the optical receiving surface is a distorted plane. Each of the N1 optical receiving regions is in a shape of a distorted axisymmetric quadrangle, or each of the N1 optical receiving regions is in a shape of a distorted axisymmetric hexagon. The N1 optical receiving regions are centrosymmetric about an optical axis of the optical receiving surface. In addition, an area difference between an optical receiving region i in the N1 optical receiving regions and a central optical receiving region in the N1 optical receiving regions is less than an area difference between an optical receiving region j and the central optical receiving region in the N1 optical receiving regions. The central optical receiving region is an optical receiving region through which the optical axis of the optical receiving surface passes, and a distance between the optical receiving region i and the central optical receiving region is less than a distance between the optical receiving region j and the central optical receiving region.

With reference to the first aspect, in a feasible implementation, the distorted plane is obtained through distortion on a third plane, the third plane includes N1 fifth optical receiving regions, each of the N1 fifth optical receiving regions is in a shape of an axisymmetric hexagon or an axisymmetric quadrangle, and one of the N1 optical receiving regions is obtained through distortion on one of the N1 fifth optical receiving regions.

With reference to the first aspect, in a feasible implementation, the optical receiving surface is obtained through barrel distortion or pincushion distortion on the third plane.

With reference to the first aspect, in a feasible implementation, each of the N1 optical receiving regions includes N3 first optical receiving sub-regions. A first PD array provided in each optical receiving region includes N3 second PD arrays, and one second PD array is provided in one first optical receiving sub-region. N3 is a positive integer greater than or equal to 2.

In the foregoing implementation, the first PD array is divided into a plurality of smaller second PD arrays, to effectively ensure that a smallest PD array includes a small quantity of PDs, so as to effectively increase the communication bandwidth of the photoreceiver.

With reference to the first aspect, in a feasible implementation, a difference between N3 and $\sqrt[3]{X}$ is less than or equal to a preset difference, where X is a total quantity of PDs included in the N1 first PD arrays.

With reference to the first aspect, in a feasible implementation, when the optical receiving surface is a continuous quadric surface, each of the N3 first optical receiving sub-regions is in a shape of an axisymmetric curved quadrangle or an axisymmetric curved hexagon. Alternatively, when the optical receiving surface is a stitched curved surface or a second plane, each of the N3 first optical receiving sub-regions is in a shape of an axisymmetric quadrangle or an axisymmetric hexagon. Alternatively, when the optical receiving surface is a distorted plane, each of the N3 first optical receiving sub-regions is in a shape of a distorted axisymmetric quadrangle or a distorted axisymmetric hexagon.

With reference to the first aspect, in a feasible implementation, the N3 second PD arrays included in each first PD array are configured to convert received optical energy into N3 second electrical parameters and output the N3 second electrical parameters, and the first electrical parameter output by each first PD array includes the N3 second electrical parameters output by the N3 second PD arrays included in each first PD array.

With reference to the first aspect, in a feasible implementation, each optical receiving region further includes N4 second optical receiving sub-regions, and a sum of areas of the N3 first optical receiving sub-regions and the N4 second optical receiving sub-regions included in each optical receiving region is equal to an area of each optical receiving region. A part of an edge of each of the N4 second optical receiving sub-regions is connected to a part of an edge of each optical receiving region. Each second optical receiving sub-region is in an irregular shape that is different from a shape of each first optical receiving sub-region. N4 third PD arrays are provided in the N4 second optical receiving sub-regions. N4 is a positive integer greater than or equal to 1 and less than N3.

With reference to the first aspect, in a feasible implementation, the N3 second PD arrays included in each first PD array are configured to convert received optical energy into N3 second electrical parameters and output the N3 second electrical parameters. The N4 third PD arrays included in each first PD array are configured to convert received optical energy into N4 third electrical parameters and output the N4 third electrical parameters. The first electrical parameter output by each first PD array includes the N3 second electrical parameters output by the N3 second PD arrays included in each first PD array and the N4 third electrical parameters output by the N4 third PD arrays included in each first PD array.

With reference to the first aspect, in a feasible implementation, any first PD array in the N1 first PD arrays includes N5 first PD networks. All PDs in each of the N5 first PD networks are connected in series and form a zigzag line structure. An extension direction of the zigzag line structure formed by each first PD network is fixed and parallel to one symmetry axis of an optical receiving region in which the any first PD array is located. A quantity of PDs included in each first PD network is greater than or equal to a first threshold. N5 is a positive integer greater than or equal to 2.

In the foregoing implementation, the first PD array includes a plurality of first PD networks that are independent of each other, and each first PD network is of a zigzag line structure. In this way, a delay in a circuit can be effectively shortened, and the communication bandwidth of the photoreceiver is further increased.

With reference to the first aspect, in a feasible implementation, any three adjacent PDs in the zigzag line structure formed by each first PD network are arranged in an isosceles triangle, or any four adjacent PDs in the zigzag line structure formed by each first PD network are arranged in a rectangle.

With reference to the first aspect, in a feasible implementation, the N5 first PD networks included in the any first PD array in the N1 first PD arrays are configured to convert received optical energy into N5 fifth electrical parameters and output the N5 fifth electrical parameters, and a first electrical parameter output by the any first PD array is obtained by superposing the N5 fifth electrical parameters output by the N5 first PD networks included in the any first PD array.

With reference to the first aspect, in a feasible implementation, the any first PD array further includes N6 second PD networks. There is at least one first PD network between each of the N6 second PD networks and a central point of the optical receiving region in which the any first PD array is located. A quantity of PDs included in each of the N6 second PD networks is greater than the first threshold, all PDs included in each second PD network are connected in series and form a broken-line structure with an unfixed extension direction. A part of PDs included in each second PD network are connected in series and form a zigzag line structure, and an extension direction of the formed zigzag line structure is parallel to the symmetry axis of the optical receiving region in which the any first PD array is located. N6 is a positive integer greater than or equal to 1 and less than N5.

In the foregoing implementation, a part of PDs in a first PD array that are located at an edge of an optical receiving region and that cannot form an integer quantity of first PD networks are connected in series to form a special second PD network. In this way, the first PD array can include a plurality of same or different PD networks, to ensure the receiving performance of the photoreceiver.

With reference to the first aspect, in a feasible implementation, the N5 first PD networks included in the any first PD array in the N1 first PD arrays are configured to convert received optical energy into the N5 fifth electrical parameters and output the N5 fifth electrical parameters. N6 second PD networks included in the any first PD are configured to convert received optical energy into N6 sixth electrical parameters and output the N6 sixth electrical parameters. A first electrical parameter output by the any first PD array is obtained by superposing the N5 fifth electrical parameters output by the N5 first PD networks included in the any first PD array and the N6 sixth electrical parameters output by the N6 second PD networks included in the any first PD array.

With reference to the first aspect, in a feasible implementation, the any first PD array further includes N7 third PD networks. There is at least one first PD network between each of the N7 third PD networks and a central point of an optical receiving region in which the any first PD array is located. A quantity of PDs included in each of the N7 third PD networks is greater than the first threshold, all PDs included in each third PD network are connected in series and form a broken-line structure with an unfixed extension direction. N7 is a positive integer greater than or equal to 1 and less than N5.

In the foregoing implementation, a part of PDs in a first PD array that are located at an edge of an optical receiving region and that cannot form an integer quantity of first PD networks are connected in series to form a special third PD network. In this way, the first PD array can include a plurality of same or different PD networks, to ensure the receiving performance of the photoreceiver.

With reference to the first aspect, in a feasible implementation, the N5 first PD networks included in the any first PD array in the N1 first PDs are configured to convert received optical energy into the N5 fifth electrical parameters. The N7 third PD networks included in the any first PD array are configured to convert received optical energy into N7 seventh electrical parameters. A first electrical parameter output by the any first PD array is obtained by superposing the N5 fifth electrical parameters output by the N5 first PD networks included in the any first PD array and the N7 seventh electrical parameters output by the N7 third PD networks included in the any first PD array.

With reference to the first aspect, in a feasible implementation, the photoreceiver further includes an output control module, and the output control module is separately connected to the N1 first PD arrays. When first signal light is incident to the photoreceiver, the output control module is configured to amplify the first electrical parameter output by each of the N1 first PD arrays, to obtain N1 eighth electrical parameters. The output control module is further configured to determine N2 target first PD arrays from the N1 first PD arrays based on the N1 eighth electrical parameters, and output an eighth electrical parameter corresponding to each of the N2 target first PD arrays.

According to a second aspect, this application provides an optical receiver. The optical receiver includes a signal processing module and the photoreceiver provided in any one of the first aspect or the possible implementations of the first aspect. The signal processing module is connected to the photoreceiver. The photoreceiver is configured to receive first signal light via N2 target first PD arrays in the N1 first PD arrays, and output N2 eighth electrical parameters. N2 is a positive integer greater than or equal to 1 and less than N1. The signal processing module is configured to process the N2 eighth electrical parameters to obtain to-be-transmitted data carried on the first signal light.

With reference to the second aspect, in a feasible implementation, the signal processing module includes an analog-to-digital converter and a digital signal processor. The analog-to-digital converter is configured to perform analog-to-digital conversion on the N2 eighth electrical parameters to obtain N2 digital signals. The digital signal processor is configured to process the N2 digital signals to obtain the to-be-transmitted data.

According to a third aspect, this application provides an optical communication system. The optical communication system includes an optical transmitter and the optical receiver provided in any one of the second aspect or the possible implementations of the second aspect.

According to a fourth aspect, this application provides an optical receiving method. The method is applicable to the optical receiver provided in any one of the second aspect or the possible implementations of the second aspect. When first signal light arrives at an optical receiving surface, the optical receiver obtains N2 eighth electrical parameters output by N2 target first PD arrays in N1 first PD arrays on a photoreceiver, where N2 is a positive integer greater than or equal to 1 and less than N1. The optical receiver processes, by using a signal processing module, the N2 eighth electrical parameters to obtain to-be-transmitted data carried on the first signal light.

With reference to the fourth aspect, in a feasible implementation, the optical receiver may sequentially obtain, via the photoreceiver, eighth electrical parameters output by the N1 first PD arrays. When it is determined that a value of an eighth electrical parameter output by any first PD array in the N1 first PD arrays is greater than or equal to a preset electrical parameter value, the any first PD array and N2-1 first PD arrays surrounding the any first PD array are determined as the N2 target first PD arrays.

The solutions provided in the second aspect to the fourth aspect are used to implement or cooperate to implement the photoreceiver provided in the first aspect, and therefore, can achieve beneficial effects the same as or corresponding to those in the first aspect. Details are not described herein again.

In conclusion, the photoreceiver provided in embodiments of this application can increase the communication bandwidth of the optical receiver, to improve the applicability and practicability of the optical receiver in the integrated sensing and communication system.

## BRIEF DESCRIPTION OF DRAWINGS

FIG. 1 is a diagram of a structure of a photoreceiver according to this application;
FIG. 2 is a diagram of a structure of an optical receiving region according to this application;
FIG. 3 is a diagram of another structure of a photoreceiver according to this application;
FIG. 4 is a diagram of another structure of a photoreceiver according to this application;
FIG. 5 is a diagram of a structure of an optical receiving surface according to this application;
FIG. 6 is a diagram of another structure of an optical receiving surface according to this application;
FIG. 7 is a diagram of another structure of an optical receiving surface according to this application;
FIG. 8 is a diagram of another structure of an optical receiving surface according to this application;
FIG. 9 is a diagram of another structure of an optical receiving surface according to this application;
FIG. 10 is a diagram of another structure of an optical receiving surface according to this application;
FIG. 11 is a diagram of another structure of an optical receiving surface according to this application;
FIG. 12 is a diagram of another structure of an optical receiving surface according to this application;
FIG. 13 is a diagram of generating an optical receiving surface according to this application;
FIG. 14 is another diagram of generating an optical receiving surface according to this application;
FIG. 15 is a diagram of another structure of an optical receiving region according to this application;
FIG. 16 is a diagram of another structure of an optical receiving region according to this application;
FIG. 17 is a diagram of another structure of an optical receiving region according to this application;
FIG. 18 is a diagram of a zigzag line structure according to this application;
FIG. 19 is a diagram of another structure of an optical receiving region according to this application;
FIG. 20 is a diagram of a structure of an optical receiver according to this application;
FIG. 21 is a diagram of another structure of an optical receiver according to this application;
FIG. 22 is a diagram of a structure of an optical communication system according to this application; and
FIG. 23 is a schematic flowchart of an optical receiving method according to this application.

## DESCRIPTION OF EMBODIMENTS

For ease of understanding and describing embodiments of this application, the following first explains and describes several concepts to be used in embodiments of this application.

1. PD array

The PD array in embodiments of this application is an aggregate formed by connecting a plurality of PDs. In an actual implementation, the PDs included in the PD array may be connected in series or in parallel. It should be understood that, generally, when all the PDs in the PD array are connected in series, an electrical signal into which the PD array converts received optical energy is a voltage signal, and the voltage signal is obtained by superposing voltage signals output by all the PDs in the PD array. When all the PDs in the PD array are connected in parallel, an electrical signal into which the PD array converts received optical energy is a current signal, and the current signal is obtained by superposing current signals output by all the PDs in the PD array. It should be noted that the PD array in embodiments of this application does not need to be distinguished based on connection manners of the PDs included in the PD array. Therefore, an electrical signal output by the PD array in embodiments of this application may be a voltage signal or a current signal. This is specifically determined based on actual application or a design requirement of the PD array provided in this application. This is not specifically limited in this application.

## 2. Curved polygon

The curved polygon (for example, a curved quadrangle, a curved pentagon, or a curved hexagon) in embodiments of this application is mainly a closed region formed by a plurality of curved edges that are connected end to end on a curved surface. In the curved polygon provided in this application, each curved edge of the curved polygon is connected to two vertices of the curved polygon. Preferably, each curved edge of the curved polygon provided in this application is a shortest curve that connects two vertices on the curved surface on which the curved polygon is located.

## 3. Optical axis of an optical receiving surface

The optical receiving surface in embodiments of this application is a surface of a photoreceiver in an optical receiver. The photoreceiver in this application is generally an optical system having rotational symmetry, and the optical axis of the optical receiving surface is a center of rotation of the photoreceiver, and the optical axis coincides with a rotational symmetry axis of the photoreceiver. If the photoreceiver is rotated by an angle less than 360 degrees about the optical axis of the optical receiving surface, the rotated photoreceiver completely coincides with the photoreceiver that is not rotated.

The following clearly and completely describes technical solutions in embodiments of this application with reference to the foregoing content and the accompanying drawings provided in embodiments of this application.

In an existing wireless optical communication system used in an integrated sensing and communication system, an optical receiver receives signal light via a high-resolution PD array including a large quantity of PDs. However, an excessively large quantity of PDs included in the PD array leads to a small communication bandwidth of the optical receiver. In addition, the integrated sensing and communication system needs a large communication bandwidth. Therefore, the existing optical receiver is not applicable to the integrated sensing and communication system that is based on the wireless optical communication system.

Based on this, a technical problem to be resolved in this application is how to increase a communication bandwidth of an optical receiver, to improve applicability and practicability of the optical receiver.

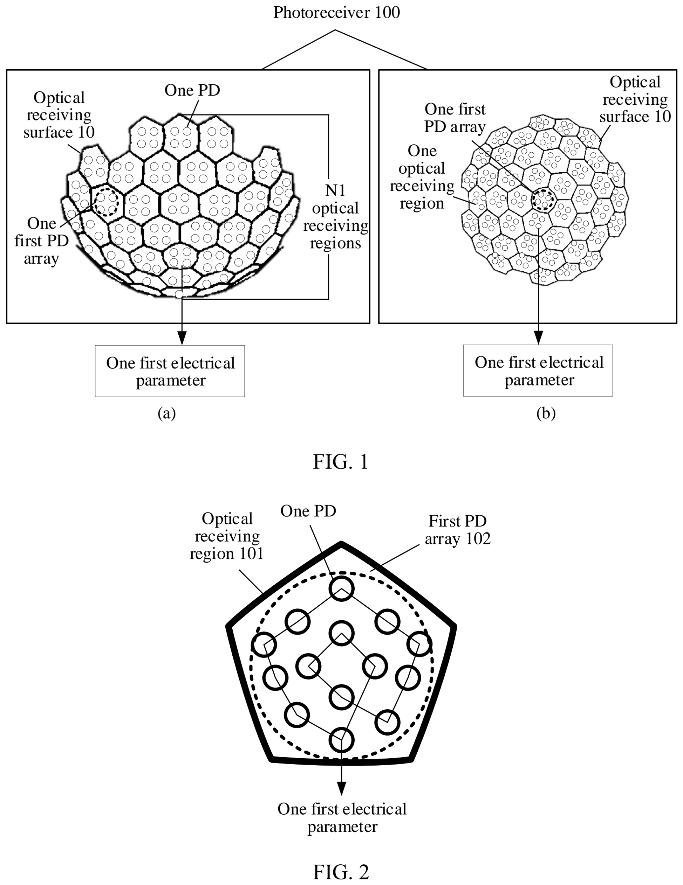

FIG. 1 is a diagram of a structure of a photoreceiver according to this application. (a) in FIG. 1 is a front view of the photoreceiver 100 according to this application, and (b) in FIG. 1 is a top view of the photoreceiver 100 in an incident direction of signal light. As shown in (a) and (b) in FIG. 1, the photoreceiver 100 mainly includes an optical receiving surface 10 and N1 first PD arrays provided on the optical receiving surface 10. N1 is a positive integer greater than or equal to 2. Each of the N1 first PD arrays includes a plurality of PDs, and the plurality of PDs in each first PD array may be connected in parallel or in series. The optical receiving surface 10 includes N1 optical receiving regions. In other words, the optical receiving surface 10 is formed by stitching the N1 optical receiving regions that are independent of each other, and each optical receiving region is a part of the optical receiving surface 10. The N1 first PD arrays are respectively provided in the N1 optical receiving regions, and each optical receiving region is provided with a unique first PD array. It should be understood that, that each first PD array is provided in one optical receiving region may be understood as that each first PD array is embedded in one optical receiving region, or all PDs included in each first PD array are uniformly or densely distributed in one optical receiving region. In an actual implementation, all the PDs included in each first PD array should be uniformly distributed as much as possible in an optical receiving region in which each first PD array is located, to avoid a large blank region in which no PD is distributed in an optical receiving region. FIG. 2 is a diagram of a structure of an optical receiving region according to this application. As shown in FIG. 2, an optical receiving region 101 in the N1 optical receiving regions is used as an example. A first PD array 102 is provided in the optical receiving region 101. The first PD array 102 includes a plurality of PDs, and the plurality of PDs are connected in series.

It should be noted that the optical receiving region in this application is a partial surface of the optical receiving surface 10, and may also be referred to as an optical receiving sub-surface, a partial optical receiving surface, or the like. (a) or (b) in FIG. 1 schematically shows only a plurality of optical receiving regions in the N1 optical receiving regions, and schematically shows only PDs included in each first PD array. In an actual implementation, a quantity N1 of optical receiving regions (which may also be understood as a quantity of first PD arrays) and a quantity of PDs included in each first PD array may be determined based on an actual application requirement of the photoreceiver 100. This is not specifically limited in this application. It should be further noted that the optical receiving surface 10 presented in (a) or (b) in FIG. 1 is a sphere. This is merely an example. A form of the optical receiving surface 10 is not specifically limited in embodiments of this application. The optical receiving surface 10 may be the sphere shown in FIG. 1, or may be another quadric surface such as an ellipsoid, or may be a non-quadric surface, a plane, a distorted plane, or the like.

During actual operation, each of the N1 first PD arrays may be configured to perform, via the plurality of PDs included in each first PD array, photoelectric conversion on optical energy received by the first PD array, and output a first electrical parameter obtained through the conversion. It should be understood that an electrical parameter in embodiments of this application may be a voltage signal or a current signal, and is specifically determined by a connection relationship between the plurality of PDs in each first PD array. This is not specifically limited in this application. It should be further noted herein that, because the signal light arriving at the optical receiving surface 10 is generally collimated and converged, a light spot formed by the signal light on the optical receiving surface 10 generally falls in only a part of the N1 optical receiving regions. Therefore, when the signal light is actually received, only a part of the N1 first PD arrays receive optical energy. In other words, at a specific moment after the signal light arrives at the optical receiving surface 10, only a part of the N1 first PD arrays output first electrical parameters that are not equal to zero, and first electrical parameters output by other first PD arrays that cannot receive optical energy are equal to zero.

In the foregoing implementation, the optical receiving surface 10 of the photoreceiver 100 is divided into a plurality of optical receiving regions, and a corresponding first PD array is provided in each optical receiving region. In addition, any optical receiving region in the foregoing plurality of optical receiving regions is set in a shape of an axisymmetric curved quadrangle, an axisymmetric curved pentagon, an axisymmetric curved hexagon, a sphere, or an ellipsoid; or an axisymmetric quadrangle, an axisymmetric pentagon, or an axisymmetric hexagon; or a distorted axisymmetric quadrangle or a distorted axisymmetric hexagon. In this way, PDs included in a first PD array provided in each optical receiving region are distributed uniformly, so that each first PD array includes a small quantity of PDs, and a light spot formed by signal light on the optical receiving surface 10 falls only on a first PD array including a small quantity of PDs. The photoreceiver 100 provided in this application has a large communication bandwidth. The photoreceiver 100 is used in an optical receiver, so that a communication bandwidth of the optical receiver can be effectively increased, to improve applicability and practicability of the optical receiver in an integrated sensing and communication system.

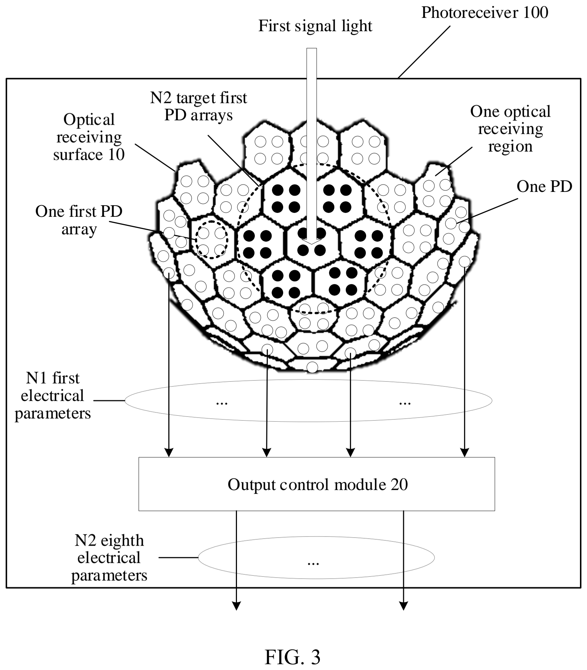

In some feasible implementations, FIG. 3 is a diagram of another structure of a photoreceiver according to this application. As shown in FIG. 3, the photoreceiver 100 may further include an output control module 20. The output control module 20 is connected to each of the N1 first PD arrays. Specifically, the output control module 20 is connected to an electrical interface that is used by each of the N1 first PD arrays to output the first electrical parameter.

During actual operation, when first signal light is incident to the photoreceiver 100, the output control module 20 may be configured to amplify the first electrical parameter output by each of the N1 first PD arrays, to obtain N1 amplified first electrical parameters (where for ease of description, an eighth electrical parameter is used as a substitute for description below). The output control module 20 is further configured to determine N2 target first PD arrays from the N1 first PD arrays based on the N1 eighth electrical parameters, and output an eighth electrical parameter corresponding to each of the N2 target first PD arrays.

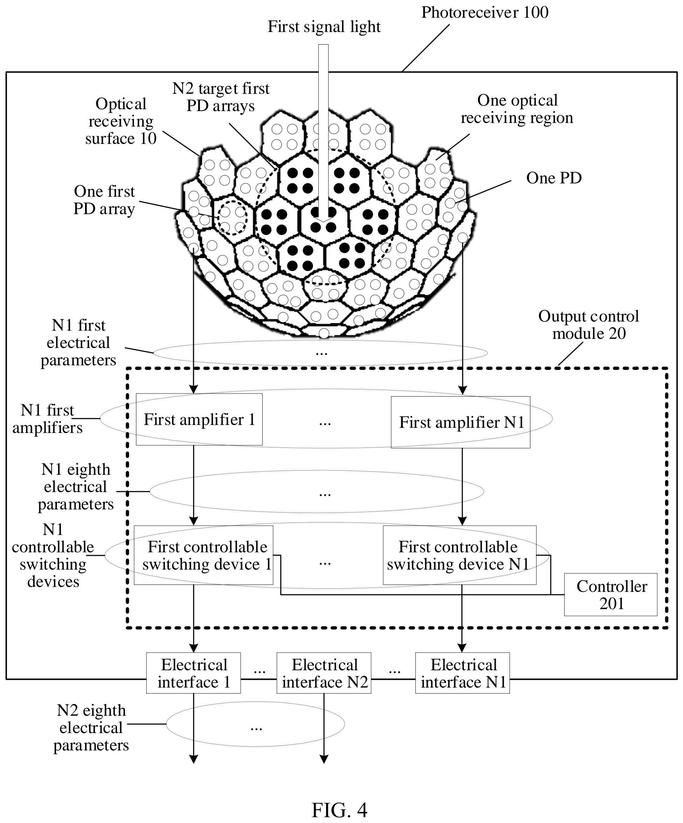

Further, FIG. 4 is a diagram of another structure of a photoreceiver according to this application. As shown in FIG. 4, the output control module 20 may include N1 first amplifiers (including a first amplifier 1 to a first amplifier N1), N1 first controllable switching devices (including a first controllable switching device 1 to a first controllable switching device N1), and a controller 201. The N1 first PD arrays are respectively connected to the N1 first amplifiers, and the N1 first amplifiers are further respectively connected to the N1 first controllable switching devices. The N1 first controllable switching devices are respectively connected to N1 electrical interfaces (including an electrical interface 1 to an electrical interface N 1) of the photoreceiver 100, and the controller 201 is separately connected to the N1 first controllable switching devices.

During actual operation, when the first signal light is incident to the photoreceiver 100, the N1 first PD arrays respectively output N1 first electrical parameters to the N1 first amplifiers. It should be understood that a value of a first electrical parameter output by a first PD array that can receive optical energy is greater than zero, and a value of a first electrical parameter output by a first PD array that cannot receive optical energy is equal to zero. The N1 first amplifiers respectively amplify the first electrical parameters received by the N1 first amplifiers to obtain N1 eighth electrical parameters, and respectively send the N1 eighth electrical parameters to the N1 first controllable switching devices. In addition, the controller 201 may sequentially turn on the N1 first controllable switching devices based on a preset sequence. It is assumed that the N1 first controllable switching devices are sequentially turned on from the first controllable switching device 1 to the first controllable switching device N1. After turning on any first controllable switching device, the controller 201 obtains an eighth electrical parameter (where for ease of differentiation, an eighth electrical parameter Z is used as a substitute for description herein) output by the first controllable switching device, and further determines whether a value of the eighth electrical parameter Z is greater than or equal to a preset electrical parameter value. If the controller 201 determines that the value of the eighth electrical parameter Z is greater than or equal to the preset electrical parameter value, the controller 201 may determine a first PD array corresponding to the eighth electrical parameter, and then determine the first PD array and N2-1 first PD arrays within a preset range around the first PD array as the N2 target first PD arrays. In other words, the controller 201 may determine that a light spot formed by the first signal light mainly falls on the N2 target first PD arrays. Then, the controller 201 may turn on all the N2 first controllable switching devices connected to the N2 target first PD arrays, and turn off all N3-N2 first controllable switching devices excluding the N2 first controllable switching devices, so that N2 electrical interfaces connected to the N2 first controllable switching devices output N2 eighth electrical parameters corresponding to the N2 target first PD arrays. If the controller 201 determines that the value of the eighth electrical parameter Z is less than the preset electrical parameter value, the controller 201 may turn on a next first controllable switching device, and repeat operations such as the determining until the N2 target first PD arrays are determined and the N2 eighth electrical parameters are output.

In some feasible implementations, the optical receiving surface 10 may be a continuous non-quadric surface. In this case, any optical receiving region in the N1 optical receiving regions may be in a shape of an axisymmetric curved quadrangle, an axisymmetric curved pentagon, or an axisymmetric curved hexagon. In other words, a plurality of PDs included in any first PD array in the N1 first PD arrays are arranged in a shape of an axisymmetric curved quadrangle, an axisymmetric curved pentagon, or an axisymmetric curved hexagon in a corresponding optical receiving region. It should be understood that, in an actual implementation, each of the N1 optical receiving regions may be in a shape of an axisymmetric curved quadrangle, an axisymmetric curved pentagon, or an axisymmetric curved hexagon. Alternatively, a part of the N1 optical receiving regions are in a shape of an axisymmetric curved quadrangle, and another part of the N1 optical receiving regions are in a shape of an axisymmetric curved pentagon. Alternatively, a part of the N1 optical receiving regions are in a shape of an axisymmetric curved quadrangle, and another part of the N1 optical receiving regions are in a shape of an axisymmetric curved hexagon. Alternatively, a part of the N1 optical receiving regions are in a shape of an axisymmetric curved pentagon, and another part of the N1 optical receiving regions are in a shape of an axisymmetric curved hexagon. Alternatively, a part of the N1 optical receiving regions are in a shape of an axisymmetric curved quadrangle, another part of the N1 optical receiving regions are in a shape of an axisymmetric curved pentagon, and a remaining part of optical receiving regions are in a shape of an axisymmetric hexagon. A specific implementation may be determined based on a size and a shape of the optical receiving surface 10. This is not specifically limited in this application.

In the foregoing implementations, the optical receiving surface 10 is designed as a structure of the continuous non-quadric surface, and each optical receiving region is designed in a shape of the axisymmetric curved quadrangle, the axisymmetric curved pentagon, or the axisymmetric curved hexagon. In this way, impact of aberration on receiving performance of the photoreceiver 100 can be reduced through surface design, and the communication bandwidth of the photoreceiver 100 can be increased through shape design for each optical receiving region, to improve applicability of the photoreceiver 100.

In some feasible implementations, the optical receiving surface 10 may be a continuous quadric surface, for example, a non-closed sphere or a non-closed ellipsoid. In this case, each of the N1 optical receiving regions may be in a shape of an axisymmetric curved pentagon, and N1 is greater than or equal to 6. In other words, the optical receiving surface 10 includes at least six optical receiving regions in a shape of an axisymmetric curved pentagon. There is at least one specific optical receiving region in the at least six optical receiving regions, and each curved edge of the at least one specific optical receiving region is connected to a curved edge of another optical receiving region. The plurality of PDs included in each of the N1 first PD arrays are arranged in a shape of an axisymmetric curved pentagon in a corresponding optical receiving region.

Alternatively, in this case, each of the N1 optical receiving regions may be in a shape of an axisymmetric curved hexagon, and N1 is greater than or equal to 7. In other words, the optical receiving surface 10 includes at least seven optical receiving regions in a shape of an axisymmetric curved hexagon. There is at least one specific optical receiving region in the at least seven optical receiving regions, and each curved edge of the at least one specific optical receiving region is connected to a curved edge of another optical receiving region. The plurality of PDs included in each of the N1 first PD arrays are arranged in a shape of an axisymmetric curved hexagon in a corresponding optical receiving region.

In the foregoing implementation, the optical receiving surface 10 is designed as a structure of the continuous quadric surface, and each optical receiving region is designed in a shape of the axisymmetric curved pentagon or the axisymmetric curved hexagon. Impact of aberration on receiving performance of the photoreceiver 100 can be reduced by designing the optical receiving surface 10 as a curved surface. In addition, design of each optical receiving region in a shape of the axisymmetric curved pentagon or the axisymmetric curved hexagon can increase the communication bandwidth of the photoreceiver 100 and facilitate design and production of the optical receiving surface 10.

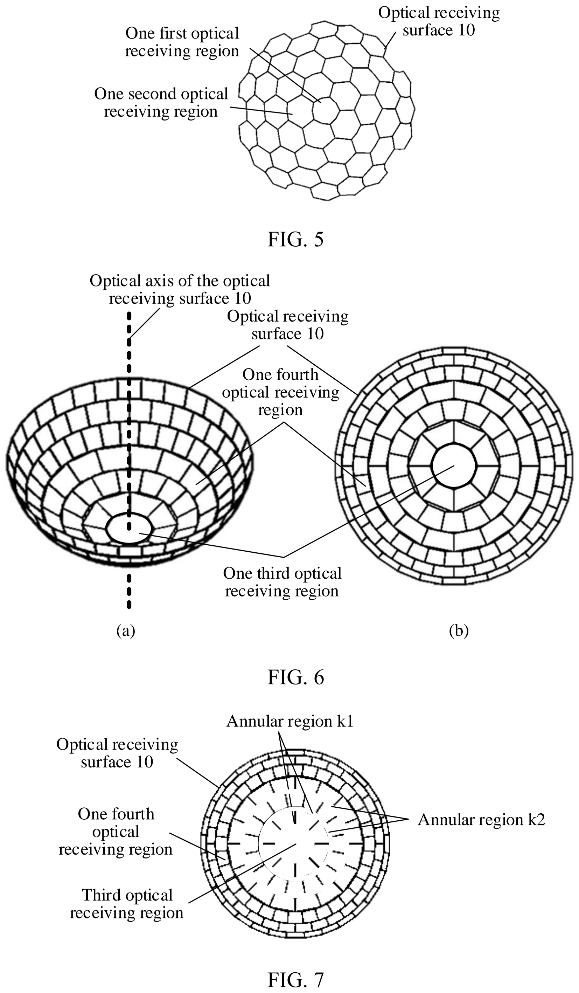

In some feasible implementations, the optical receiving surface 10 may be a continuous quadric surface. In this case, the N1 optical receiving regions may include M1 first optical receiving regions and M2 second optical receiving regions. M1 is a positive integer greater than or equal to 1. M2 is a positive integer greater than or equal to 5. Each of the M1 first optical receiving regions is in a shape of an axisymmetric curved pentagon. Each of the M2 second optical receiving regions is in a shape of an axisymmetric curved hexagon. In other words, in the N1 first PD arrays, a plurality of PDs included in the M1 first PD arrays are arranged in a shape of an axisymmetric curved pentagon in a corresponding optical receiving region, and a plurality of PDs included in the remaining M2 first PD arrays are arranged in a shape of an axisymmetric curved hexagon in a corresponding optical receiving region. For example, FIG. 5 is a diagram of a structure of an optical receiving surface according to this application. It should be understood that FIG. 5 shows a top view of the optical receiving surface 10 in the incident direction of the signal light, and does not show a first PD array included in each optical receiving region. As shown in FIG. 5, the optical receiving surface 10 is a non-closed sphere, and includes one first optical receiving region in a shape of an axisymmetric curved pentagon and a plurality of second optical receiving regions in a shape of an axisymmetric curved hexagon. It should be understood that FIG. 5 is merely an example. In an actual implementation, a quantity of first optical receiving regions needs to be greater than 1, and a quantity of second optical receiving regions needs to be greater than 5. A value of the quantity of first optical receiving regions and a value of the quantity of second optical receiving regions may be determined based on an application requirement of the optical receiving surface 10. This is not specifically limited in this application.

In the foregoing implementation, the optical receiving surface 10 is designed as a structure of the continuous quadric surface, and the optical receiving surface 10 includes the first optical receiving region in a shape of the curved pentagon and the second optical receiving region in a shape of the curved hexagon. This can increase the communication bandwidth of the photoreceiver 100, reduce impact of aberration on receiving performance of the photoreceiver 100, and further facilitate design and production of the optical receiving surface 10.

Optionally, in an actual implementation, five curved edges of each of the M1 first optical receiving regions may be connected to edges of five second optical receiving regions. This can ensure that an overall shape of the optical receiving surface 10 is regular, to facilitate design and production of the optical receiving surface 10.

It should be additionally noted that, when the optical receiving surface 10 is the non-closed sphere, in a specific design process, a closed sphere of a preset size may be first processed by using an inscribed polyhedron generation algorithm, to obtain an inscribed polyhedron corresponding to the closed sphere. A plurality of vertices corresponding to the inscribed polyhedron may be determined, and a part of vertices are selected from the plurality of vertices. A sphere on which the part of selected vertices are located may be used as the optical receiving surface 10, and the part of vertices are determined as vertices of the N1 optical receiving regions. In addition, curved pentagons formed by the part of vertices may be used as the M1 first optical receiving regions, and curved hexagons formed by the part of vertices may be used as the M2 second optical receiving regions, to complete structural design of the optical receiving surface 10.

For example, the inscribed polyhedron in the closed sphere may be constructed in a Goldberg-Coxeter construction manner. Assuming that a constructed Goldberg polyhedron has 2n vertices, the Goldberg polyhedron may include 12 surfaces in a shape of a curved pentagon and n-10 surfaces in a shape of a curved hexagon. n is a positive integer greater than or equal to 10. Then, the M1 first optical receiving regions and the M2 second optical receiving regions may be selected from the foregoing 12 surfaces in a shape of the curved pentagon and the foregoing n-10 surfaces in a shape of the curved hexagon, to form the optical receiving surface 10. It should be understood that an optional design procedure of the optical receiving surface 10 is merely described herein by using an example. In an actual implementation, the structural design of the optical receiving surface 10 may alternatively be completed in another manner. This is not specifically limited in this application.

In some feasible implementations, the optical receiving surface 10 is a continuous quadric surface. In this case, the N1 optical receiving regions may include one third optical receiving region and M3 fourth optical receiving regions. M3 is a positive integer greater than or equal to 2. An optical axis of the optical receiving surface 10 passes through the third optical receiving region, and the third optical receiving region is in a shape of a sphere or an ellipsoid. Each of the M3 fourth optical receiving regions is in a shape of a curved quadrangle. In other words, a plurality of PDs included in one of the N1 first PD arrays are arranged in a shape of a sphere or an ellipsoid in the third optical receiving region, and a plurality of PDs included in the remaining M3 first PD arrays are arranged in a shape of an axisymmetric curved quadrangle in a corresponding optical receiving region.

For example, FIG. 6 is a diagram of another structure of an optical receiving surface according to this application. It should be understood that FIG. 6 shows an example in which the optical receiving surface 10 is a sphere. (a) in FIG. 6 is a side view of the optical receiving surface 10, (b) in FIG. 6 is a top view of the optical receiving surface 10, and a first PD array included in each optical receiving region is not shown. As shown in FIG. 6, the optical receiving surface 10 may include one third optical receiving region in a shape of a sphere and a plurality of fourth optical receiving regions in a shape of a curved quadrangle. Generally, the M3 fourth optical receiving regions should surround the third optical receiving region. It should be understood that FIG. 6 is merely an example, and schematically shows a plurality of fourth optical receiving regions. In an actual implementation, a value of a quantity of fourth optical receiving regions may be determined based on an application requirement of the optical receiving surface 10. This is not specifically limited in this application.

In the foregoing implementations, the optical receiving surface 10 is designed as a structure of the continuous quadric surface, and the optical receiving surface 10 includes one third optical receiving region in a shape of the sphere or the ellipsoid and M3 optical receiving regions in a shape of the curved quadrangle.

This can increase the communication bandwidth of the photoreceiver 100, reduce impact of aberration on receiving performance of the photoreceiver 100, and further facilitate design and production of the optical receiving surface 10.

Further, when the optical receiving surface 10 includes one third optical receiving region in a shape of the sphere or the ellipsoid and the M3 fourth optical receiving regions in a shape of the curved quadrangle, M3 should be greater than or equal to 5. The M3 fourth optical receiving regions form at least two curved annular regions around the optical axis. Each of the at least two curved annular regions includes at least two fourth optical receiving regions. An inner edge of one of the at least two curved annular regions is connected to an edge of the third optical receiving region. In any two connected curved annular regions in the at least two curved annular regions, a quantity of fourth optical receiving regions included in a curved annular region close to the third optical receiving region is less than a quantity of fourth optical receiving regions included in a curved annular region far from the third optical receiving region. In other words, the foregoing M3 fourth optical receiving regions in a shape of the curved quadrangle form the at least two curved annular regions by using the third optical receiving region as a center. Centers of the curved annular regions are all on the optical axis of the optical receiving surface 10, and a larger curved annular region includes a larger quantity of fourth optical receiving regions.

For example, FIG. 7 is a diagram of another structure of an optical receiving surface according to this application. It should be understood that FIG. 7 is a top view of the optical receiving surface 10 in an optical axis direction, and does not show a first PD array included in each optical receiving region. As shown in FIG. 7, there are a plurality of curved annular regions on a periphery of the third optical receiving region (where FIG. 7 schematically shows only six curved annular regions, and the curved annular regions include a curved annular region k1 and a curved annular region k2). An inner edge of the curved annular region k1 with a smallest size in the plurality of curved annular regions is connected to an edge of the third optical receiving region. It should be noted herein that, for any curved annular region, an edge of the curved annular region close to the third optical receiving region is referred to as an inner edge, and an edge of the curved annular region far from the third optical receiving region is referred to as an outer edge. It should be understood that, for any two connected curved annular regions in the at least two curved annular regions, an inner edge of a curved annular region with a large size is connected to an outer edge of a curved annular region with a small size. As shown in FIG. 7, the curved annular region k1 and the curved annular region k2 are adjacent curved annular regions, and a size of the curved annular region k2 is greater than a size of the curved annular region k1, so that an outer edge of the curved annular region k1 is connected to an inner edge of the curved annular region k2. In addition, the curved annular region k1 is closer to the third optical receiving region, and therefore, a quantity of fourth optical receiving regions included in the curved annular region k1 is less than a quantity of fourth optical receiving regions included in the curved annular region k2. It should be noted herein that a curved annular region (that is, the curved annular region k1 shown in FIG. 7) connected to the third optical receiving region should include at least two fourth optical receiving regions.

In the foregoing implementation, when the optical receiving surface 10 includes one third optical receiving region in a shape of the sphere or the ellipsoid and the M3 fourth optical receiving regions in a shape of the curved quadrangle, the M3 fourth optical receiving regions in a shape of the curved quadrangle form the at least two curved annular regions by using the third optical receiving region as a center, where centers of the curved annular regions are on the optical axis of the optical receiving surface 10, and a larger curved annular region includes a larger quantity of fourth optical receiving regions. This structure can increase the communication bandwidth of the photoreceiver 100, reduce impact of aberration on receiving performance of the photoreceiver 100, and further facilitate design and production of the optical receiving surface 10.

In some feasible implementations, the optical receiving surface 10 may be a stitched curved surface, and may be formed by stitching N1 planes (where for ease of differentiation, a first plane is used as a substitute for description below). One of the N1 first planes is one of the N1 optical receiving regions. In this case, any optical receiving region in the N1 optical receiving regions is in a shape of an axisymmetric quadrangle, an axisymmetric pentagon, or an axisymmetric hexagon. In other words, any first plane in the N1 first planes is in a shape of an axisymmetric quadrangle, an axisymmetric pentagon, or an axisymmetric hexagon.

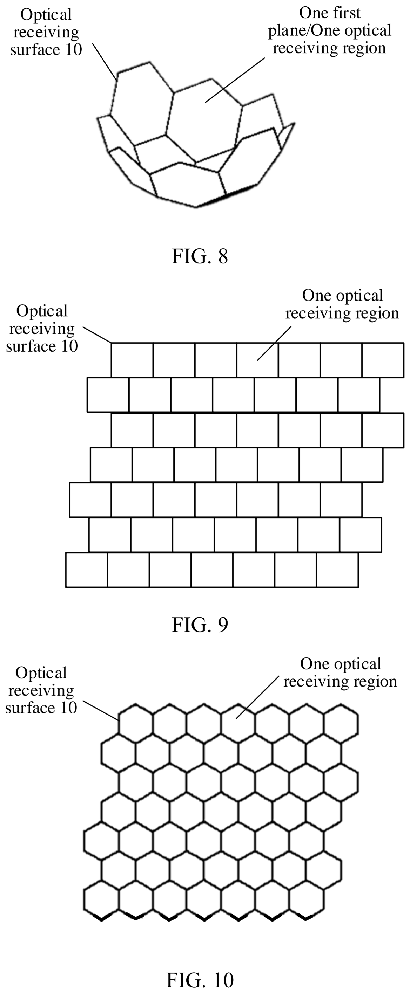

For example, FIG. 8 is a diagram of another structure of an optical receiving surface according to this application. It should be understood that FIG. 8 is a top view of the optical receiving surface 10 in an optical axis direction, and does not show a first PD array included in each optical receiving region. As shown in FIG. 8, the optical receiving surface 10 is a spherical stitched curved surface formed by a plurality of first planes. Each first plane included in the optical receiving surface 10 is one optical receiving region. It should be understood that, when the optical receiving surface 10 is the stitched curved surface, for the N1 optical receiving regions, shapes of the optical receiving regions may be all the same, or may be partially the same, provided that the optical receiving surface 10 can be obtained through stitching. This is not specifically limited in this application. For example, a part of the optical receiving regions may be in a shape of an axisymmetric pentagon, and another part of the optical receiving regions may be in a shape of an axisymmetric hexagon. Alternatively, the optical receiving regions may each be in a shape of an axisymmetric pentagon.

In the foregoing implementation, the optical receiving surface 10 is designed as a structure of the stitched curved surface, and each stitched plane is one optical receiving region in which one first PD array is provided. In this way, the communication bandwidth of the photoreceiver 100 can be increased, impact of aberration on receiving performance of the photoreceiver 100 can be avoided, and complexity of design and production of the optical receiving surface 10 can be further reduced.

In some feasible implementations, the optical receiving surface 10 may be a plane (where for ease of differentiation, a second plane is used as a substitute for description below). In this case, each of the N1 optical receiving regions may be in a shape of an axisymmetric quadrangle. In other words, the optical receiving surface 10 may be a planar structure formed by a plurality of optical receiving regions in a shape of an axisymmetric quadrangle.

For example, FIG. 9 is a diagram of another structure of an optical receiving surface according to this application. It should be understood that FIG. 9 is a top view of the optical receiving surface 10 in an optical axis direction, and does not show a first PD array included in each optical receiving region. As shown in FIG. 9, the optical receiving surface 10 is a plane formed by a plurality of optical receiving regions in a shape of an axisymmetric quadrangle. It should be understood that FIG. 9 shows only an example of an arrangement manner of the optical receiving regions. In an actual implementation, the optical receiving regions may alternatively be arranged in another possible manner. This is not specifically limited in this application.

In the foregoing implementation, the optical receiving surface 10 is designed as a plane formed by the plurality of optical receiving regions in a shape of the axisymmetric quadrangle. In this way, the communication bandwidth of the photoreceiver can be increased, and complexity of design and production of the optical receiving surface 10 can be reduced.

Particularly, in this case, sizes of the N1 optical receiving regions are the same or similar. In addition, at least one side of any optical receiving region is connected to another two optical receiving regions. For example, as shown in FIG. 9, sizes of the N1 optical receiving regions are the same, and the optical receiving regions are arranged in a staggered manner, to ensure that at least one side of each optical receiving region is connected to another two optical receiving regions. In this implementation, it can be effectively ensured that a light spot formed by signal light on the optical receiving surface 10 falls only on a first PD array including a small quantity of PDs.

Alternatively, when the optical receiving surface 10 may be one second plane, each of the N1 optical receiving regions may be in a shape of an axisymmetric hexagon. In other words, the optical receiving surface 10 may be a planar structure formed by a plurality of optical receiving regions in a shape of an axisymmetric hexagon.

For example, FIG. 10 is a diagram of another structure of an optical receiving surface according to this application. It should be understood that FIG. 10 is a top view of the optical receiving surface 10 in an optical axis direction, and does not show a first PD array included in each optical receiving region. As shown in FIG. 10, the optical receiving surface 10 is a plane formed by a plurality of optical receiving regions in a shape of an axisymmetric hexagon. It should be understood that FIG. 10 shows only an example of an arrangement manner of the optical receiving regions. In an actual implementation, the optical receiving regions may alternatively be arranged in another possible manner. This is not specifically limited in this application.

In the foregoing implementation, the optical receiving surface 10 is designed as a plane formed by the plurality of optical receiving regions in a shape of the axisymmetric hexagon. In this way, the communication bandwidth of the photoreceiver can be increased, and complexity of design and production of the optical receiving surface 10 can be reduced.

In some feasible implementations, the optical receiving surface 10 may be a distorted plane. Each of the N1 optical receiving regions is in a shape of a distorted axisymmetric quadrangle, or each of the N1 optical receiving regions is in a shape of a distorted axisymmetric hexagon. It should be noted that the distorted plane in this application is a plane obtained through distortion performed on a normal regular plane. Distortion manners in this application mainly include barrel distortion and pincushion distortion. In this case, the N1 optical receiving regions are centrosymmetric about the optical axis of the optical receiving surface 10. In addition, an area difference between an optical receiving region i in the N1 optical receiving regions and a central optical receiving region in the N1 optical receiving regions is less than an area difference between an optical receiving region j and the central optical receiving region in the N1 optical receiving regions. The central optical receiving region is an optical receiving region through which the optical axis of the optical receiving surface 10 passes, and a distance between the optical receiving region i and the central optical receiving region is less than a distance between the optical receiving region j and the central optical receiving region.

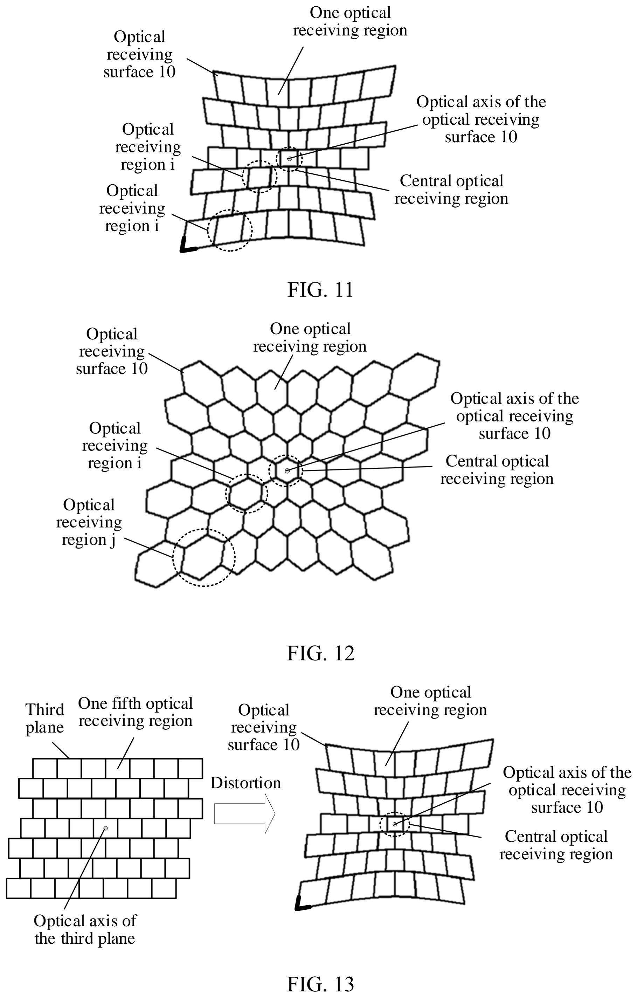

For example, FIG. 11 is a diagram of another structure of an optical receiving surface according to this application. It should be understood that FIG. 11 is a top view of the optical receiving surface 10 in an optical axis direction, and does not show a first PD array included in each optical receiving region. As shown in FIG. 11, the optical receiving surface 10 is a distorted plane formed by N1 optical receiving regions in a shape of a distorted axisymmetric quadrangle. There is a unique central optical receiving region in the N1 optical receiving regions, and N1-1 optical receiving regions in the N1 optical receiving regions excluding the central optical receiving region are centrosymmetric about the central optical receiving region. In addition, an optical receiving region farther from the central optical receiving region has a larger area difference between the optical receiving region and the central optical receiving region. As shown in FIG. 11, any optical receiving region i is closer to the central optical receiving region relative to any optical receiving region j. Therefore, an area difference between the optical receiving region i and the central optical receiving region is less than an area difference between the optical receiving region j and the central optical receiving region.

For another example, FIG. 12 is a diagram of another structure of an optical receiving surface according to this application. It should be understood that FIG. 12 is a top view of the optical receiving surface 10 in an optical axis direction, and does not show a first PD array included in each optical receiving region. As shown in FIG. 12, the optical receiving surface 10 is a distorted plane formed by N1 optical receiving regions in a shape of a distorted axisymmetric hexagon. There is a unique central optical receiving region through which the optical axis passes, and N1-1 optical receiving regions in the N1 optical receiving regions excluding the central optical receiving region are centrosymmetric about the central optical receiving region. In addition, an optical receiving region farther from the central optical receiving region has a larger area difference between the optical receiving region and the central optical receiving region. As shown in FIG. 12, the optical receiving region i is closer to the central optical receiving region relative to an optical receiving region j. Therefore, an area difference between the optical receiving region i and the central optical receiving region is less than an area difference between the optical receiving region j and the central optical receiving region.

Optionally, in a specific implementation, the foregoing distorted plane (or the optical receiving surface 10) may be obtained through distortion on a regular plane (where for ease of differentiation, a third plane is used as a substitute for description below). The third plane includes N1 fifth optical receiving regions. Each of the N1 fifth optical receiving regions is in a shape of an axisymmetric hexagon or an axisymmetric quadrangle. One of the N1 optical receiving regions may be obtained through distortion on one of the N1 fifth optical receiving regions. Particularly, the central optical receiving region on the optical receiving surface 10 is usually obtained through distortion on a fifth optical receiving region that is in the N1 fifth optical receiving regions and through which an optical axis of the third plane passes.

For example, FIG. 13 is a diagram of generating an optical receiving surface according to this application. As shown in FIG. 13, when the optical receiving surface 10 is a distorted plane, the optical receiving surface 10 may be obtained through distortion on a regular third plane, and the third plane is formed by N1 fifth optical receiving regions in a shape of an axisymmetric quadrangle. In addition, a central optical receiving region on the optical receiving surface 10 is obtained through distortion on a fifth optical receiving region that is in the N1 fifth optical receiving regions and through which an optical axis of the third plane passes. It should be understood that a specific structure of the third plane is similar to the foregoing specific structure of the second plane. Therefore, reference may be made to the foregoing.

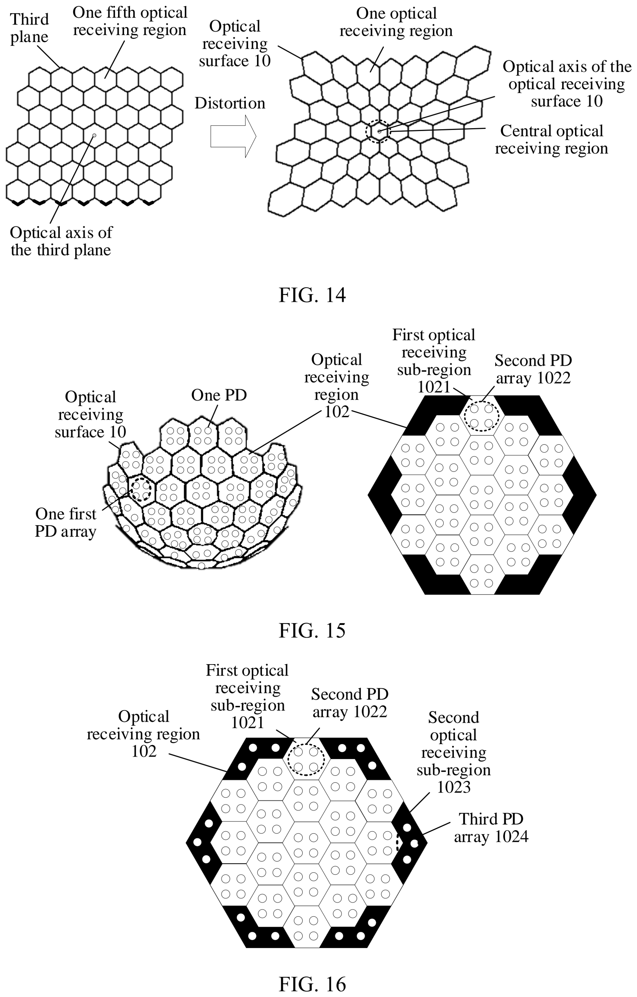

For another example, FIG. 14 is another diagram of generating an optical receiving surface according to this application. As shown in FIG. 14, when the optical receiving surface 10 is a distorted plane, the optical receiving surface 10 may be obtained through distortion on a regular third plane, and the third plane is formed by N1 fifth optical receiving regions in a shape of an axisymmetric hexagon. In addition, a central optical receiving region on the optical receiving surface 10 is obtained through distortion on a fifth optical receiving region that is in the N1 fifth optical receiving regions and through which an optical axis of the third plane passes.

It should be understood that FIG. 13 or FIG. 14 shows a scenario in which pincushion distortion is performed. However, in an actual implementation, barrel distortion may alternatively be performed on the third plane to obtain the distorted plane. Certainly, the foregoing distorted plane may be obtained in another possible distortion manner. This is not specifically limited in this application.

In some feasible implementations, each optical receiving region on the optical receiving surface 10 may be further divided into a plurality of small optical receiving regions. In addition, a first PD array provided in each optical receiving region may include a plurality of small PD arrays, and one small PD array is provided in each small optical receiving region. Similarly, the small optical receiving regions and the small PD arrays may be further divided into smaller units in a similar manner. In other words, each optical receiving region provided in this application may be divided into a plurality of levels of optical receiving regions in a multi-level division manner, and a plurality of lower-level optical receiving regions form a higher-level optical receiving region. Similarly, each first PD array provided in this application may also be divided into a plurality of levels of PD arrays in a multi-level division manner, and a plurality of lower-level PD arrays form a higher-level PD array. In a scenario in which there are a very large quantity of PDs, in the multi-level division manner, it can be effectively ensured that a smallest PD array includes a small quantity of PDs, to effectively increase the communication bandwidth of the photoreceiver 100.

It should be understood that, for the foregoing multi-level division manner, implementation processes at different levels are similar. For ease of understanding, the following uses a two-level division manner as an example for description.

In an optional implementation, each of the N1 optical receiving regions may include N3 first optical receiving sub-regions, a first PD array provided in each optical receiving region includes N3 second PD arrays, and one second PD array is provided in one first optical receiving sub-region. N3 is a positive integer greater than or equal to 2. It may also be understood that the optical receiving region uses the two-level division manner, and each optical receiving region is divided into a plurality of smaller optical receiving sub-regions. Similarly, the PD array also uses the two-level division manner, and each first PD array is divided into N3 smaller second PD arrays.

The following uses one of the N1 optical receiving regions 102 as an example. FIG. 15 is a diagram of another structure of an optical receiving region according to this application. It should be understood that FIG. 15 shows merely an example in which the optical receiving region 102 is in a shape of an axisymmetric curved hexagon. As shown in FIG. 15, the optical receiving region 102 may include a plurality of first optical receiving sub-regions in a shape of an axisymmetric curved hexagon. A first PD array provided in the optical receiving region 102 may include a plurality of second PD arrays, and one second PD array is provided in one first optical receiving sub-region. For example, a second PD array 1022 is provided in a first optical receiving sub-region 1021.

Optionally, assuming that a total quantity of PDs included in the N1 first PD arrays is X, a difference between N3 and $\sqrt[3]{X}$ may be less than or equal to a preset difference. The foregoing limitation is applied to a quantity of first optical receiving sub-regions. This can ensure that each second PD array includes a small quantity of PDs. In this way, the communication bandwidth of the photoreceiver 100 can be increased.

Optionally, when the optical receiving surface 10 is a continuous quadric surface, each of the N3 first optical receiving sub-regions is in a shape of an axisymmetric curved quadrangle or an axisymmetric curved hexagon. In other words, when the optical receiving surface 10 is a continuous quadric surface, all PDs included in each of the N3 second PD arrays are distributed in an axisymmetric curved quadrangle or an axisymmetric curved hexagon in a corresponding first optical receiving sub-region.

When the optical receiving surface 10 is a stitched curved surface or a second plane, each of the N3 first optical receiving sub-regions is in a shape of an axisymmetric quadrangle or an axisymmetric hexagon. In other words, when the optical receiving surface 10 is a stitched curved surface or a second plane, all PDs included in each of the N3 second PD arrays are distributed in an axisymmetric quadrangle or an axisymmetric hexagon in a corresponding first optical receiving sub-region.

When the optical receiving surface 10 is a distorted plane, each of the N3 first optical receiving sub-regions is in a shape of a distorted axisymmetric quadrangle or a distorted axisymmetric hexagon. In other words, all PDs included in each of the N3 second PD arrays are distributed in a distorted axisymmetric quadrangle or a distorted axisymmetric hexagon in the corresponding first optical receiving sub-region.

Optionally, during actual operation, the N3 second PD arrays included in each first PD array may be configured to convert received optical energy into N3 second electrical parameters and output the N3 second electrical parameters. In other words, when optical energy arrives at a first PD array, N3 second PD arrays in the first PD array output N3 second electrical parameters. The foregoing first electrical parameter output by each first PD array may include the N3 second electrical parameters output by the N3 second PD arrays included in each first PD array. It should be further additionally noted that the N3 second PD arrays included in each first PD array are connected to one second controllable switching device, and output of each second PD array may be controlled via each second controllable switching device. In this way, a quantity of electrical interfaces of the photoreceiver 100 can be reduced.

In another feasible implementation, each of the N1 optical receiving regions includes N3 first optical receiving sub-regions and N4 second optical receiving sub-regions. In addition, a sum of areas of the N3 first optical receiving sub-regions and the N4 second optical receiving sub-regions included in each optical receiving region is equal to an area of each optical receiving region. A part of an edge of each of the N4 second optical receiving sub-regions is connected to a part of an edge of each optical receiving region. Each second optical receiving sub-region is in an irregular shape that is different from a shape of each first optical receiving sub-region. In other words, each of the N4 second optical receiving sub-regions is located at an edge of an optical receiving region in which the second optical receiving sub-region is located, and each second optical receiving sub-region cannot include one first optical receiving sub-region. N4 third PD arrays are provided in the N4 second optical receiving sub-regions, and one third PD array is provided in one second optical receiving sub-region. N4 is a positive integer greater than or equal to 1 and less than N3.

For example, FIG. 16 is a diagram of another structure of an optical receiving region according to this application. As shown in FIG. 16, the optical receiving region 102 includes a plurality of first optical receiving sub-regions and a plurality of second optical receiving sub-regions (where it should be understood that FIG. 16 shows six second optical receiving sub-regions respectively located at six vertices of the optical receiving region 102). All the second optical receiving sub-regions are located at an edge of the optical receiving region 102, and one third PD array is provided in each second optical receiving sub-region. For example, a second optical receiving sub-region 1023 in the plurality of second optical receiving sub-regions is located at an edge of the optical receiving region 102, and a third PD array 1024 is provided in the second optical receiving sub-region 1023.

In the foregoing implementation, a part that is in each optical receiving region and that cannot form a complete first optical receiving sub-region is defined as a special second optical receiving sub-region, and all PDs included in each second optical receiving sub-region are connected together to form a special third PD array. In this way, it can be ensured that corresponding PDs can be uniformly distributed at locations in each optical receiving region, to further ensure receiving performance of the photoreceiver 100.

Optionally, during actual operation, the N3 second PD arrays included in each of the N3 first PD arrays may be configured to convert received optical energy into N3 second electrical parameters and output the N3 second electrical parameters, and the N4 third PD arrays included in each first PD array may also be configured to convert received optical energy into N4 third electrical parameters and output the N4 third electrical parameters. In this case, the foregoing first electrical parameter output by each first PD array may include the N3 second electrical parameters output by the N3 second PD arrays included in each first PD array and the N4 third electrical parameters output by the N4 third PD arrays included in each first PD array. It should be further additionally noted that the N4 third PD arrays included in each first PD array are connected to one second controllable switching device, and output of each third PD array may be controlled via each second controllable switching device.

In some feasible implementations, for a part or all of the N1 first PD arrays, all PDs included in the N1 first PD arrays may form a plurality of PD networks, and each of the plurality of formed PD networks may be formed by connecting a plurality of PDs in series. Because specific structures of all first PD arrays are the same or similar, to avoid repetition, the following uses any first PD array in the N1 first PD arrays as an example to describe the specific structure of the first PD array.

In an optional implementation, any first PD array in the N1 first PD arrays may include N5 first PD networks. All PDs in each of the N5 first PD networks are connected in series and form a zigzag line structure. An extension direction of the zigzag line structure formed by each first PD network is fixed and parallel to one symmetry axis of an optical receiving region in which the any first PD array is located. A quantity of PDs included in each first PD network is greater than or equal to a first threshold, and N5 is a positive integer greater than or equal to 2.

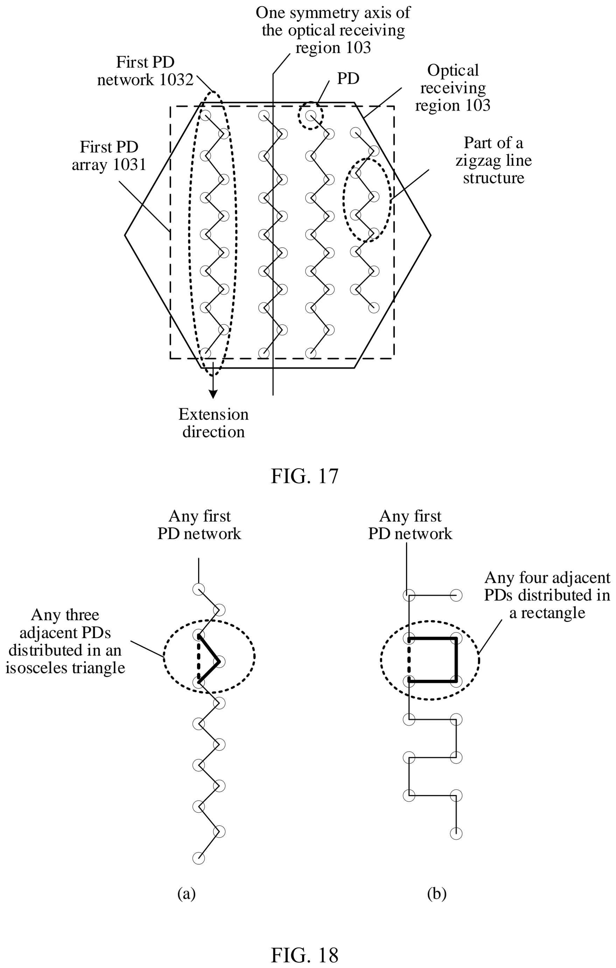

For example, FIG. 17 is a diagram of another structure of an optical receiving region according to this application. It should be understood that FIG. 17 shows an example of any optical receiving region 103 in the N1 optical receiving regions. As shown in FIG. 17, a first PD array 1031 is provided in the optical receiving region 103, and the first PD array includes a plurality of first PD networks. The first PD networks are independent of each other, and all PDs in each first PD network are connected in series and form a zigzag line structure. For example, a plurality of PDs included in a first PD network 1032 are connected in series and form a zigzag line structure. An extension direction of the first PD network 1032 (which may also be understood as a routing direction of the first PD network) is fixed, and is parallel to one symmetry axis of the optical receiving region 103. It should be additionally noted that N5 first PD networks included in any first PD array are independent of each other. In an actual implementation, an output end of each first PD network may be connected to one second controllable switching device, and output of each first PD network may be flexibly controlled via each second controllable switching device.

In the foregoing implementation, the first PD array includes a plurality of first PD networks that are independent of each other, and each first PD network is of a zigzag line structure. In this way, a delay in a circuit can be effectively shortened, and the communication bandwidth of the photoreceiver 100 is further increased.

Optionally, for any first PD array, any three adjacent PDs in a zigzag line structure formed by each first PD network included in the first PD array are arranged in an isosceles triangle.

For example, FIG. 18 is a diagram of a zigzag line structure according to this application. As shown in (a) in FIG. 18, for any first PD network, any three adjacent PDs in all PDs included in the first PD network are arranged in an isosceles triangle, or a closed pattern formed by connecting the three adjacent PDs is an isosceles triangle. Alternatively, for any first PD array, any four adjacent PDs in a zigzag line structure formed by each first PD network are arranged in a rectangle. As shown in (b) in FIG. 18, for any first PD network, any four adjacent PDs in all PDs included in the first PD network are arranged in a rectangle, or a closed pattern formed by connecting the four adjacent PDs is a rectangle. It should be understood that the foregoing two implementations are merely examples. In an actual implementation, PDs included in any first PD network may alternatively be arranged in another manner, provided that it is ensured that the PDs can form a zigzag line structure. This is not specifically limited in this application.

Further, during actual operation, the N5 first PD networks included in the any first PD array may be respectively configured to convert received optical energy into corresponding fifth electrical parameters and output the fifth electrical parameters. In other words, when a light spot of the first signal light falls on the any first PD array, the N5 first PD networks included in the any first PD array output the N5 fifth electrical parameters. It should be understood that, in this case, a first electrical parameter output by any first PD array may be obtained by superposing the N5 fifth electrical parameters output by the N5 first PD networks included in the any first PD array.

In another optional implementation, the any first PD array includes the N5 first PD networks and N6 second PD networks. N6 is a positive integer greater than or equal to 1 and less than N5. There is at least one first PD network between each of the N6 second PD networks and a central point of an optical receiving region in which the any first PD array is located. It may also be understood that the N6 second PD networks are all located at an edge of the optical receiving region in which the any first PD array is located. A quantity of PDs included in each of the N6 second PD networks is greater than the first threshold. All the PDs included in each of the N6 second PD networks are connected in series and form a broken-line structure with an unfixed extension direction. A part of the PDs included in each second PD network are connected in series and can form a zigzag line structure, and an extension direction of the formed zigzag line structure is parallel to one symmetry axis of the optical receiving region in which the any first PD array is located. In other words, each of the N6 second PD networks may include a part of the zigzag line structure.

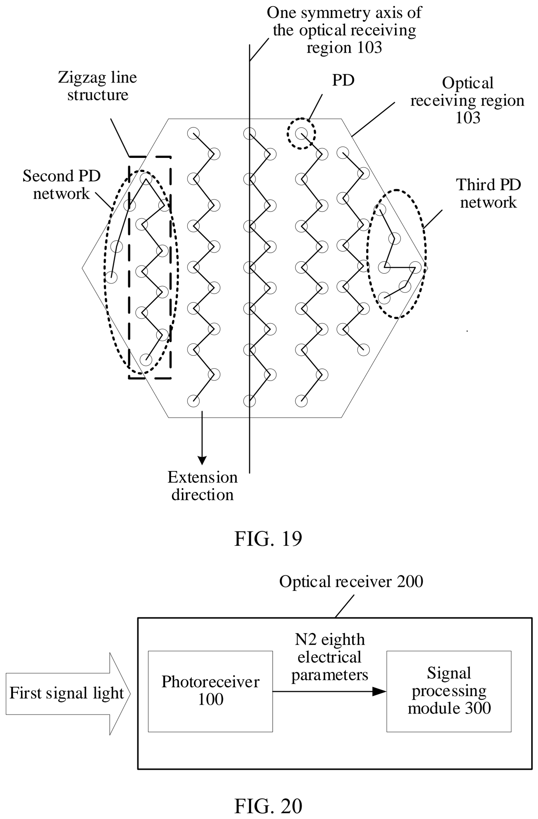

For example, FIG. 19 is a diagram of another structure of an optical receiving region according to this application. As shown in FIG. 19, a first PD array provided in an optical receiving region 103 may further include one second PD network. The second PD network is located at an edge of the optical receiving region 103, and a part of PDs in the second PD network form a zigzag line structure.

It should be additionally noted that N6 second PD networks included in any first PD array are independent of each other. In an actual implementation, an output end of each second PD network may be connected to one second controllable switching device, and output of each second PD network may be flexibly controlled via each second controllable switching device.

In the foregoing implementation, a part of PDs in a first PD array that are located at an edge of an optical receiving region and that cannot form an integer quantity of first PD networks are connected in series to form a special second PD network. In this way, the first PD array can include a plurality of same or different PD networks, to ensure receiving performance of the photoreceiver 100.

Further, when the any first PD array includes N5 first PD networks and N6 second PD networks, during actual operation, the N5 first PD networks included in the any first PD array may be configured to convert received optical energy into N5 fifth electrical parameters and output the N5 fifth electrical parameters, and the N6 second PD networks included in the any first PD may be configured to convert received optical energy into N6 sixth electrical parameters and output the N6 sixth electrical parameters. In other words, when a light spot of the first signal light falls on the any first PD array, the N5 first PD networks may output the N5 fifth electrical parameters, and the N6 second PD networks may output the N6 sixth electrical parameters. A first electrical parameter output by the any first PD array is obtained by superposing the N5 fifth electrical parameters output by the N5 first PD networks included in the any first PD array and the N6 sixth electrical parameters output by the N6 second PD networks included in the any first PD array.

In another optional implementation, the any first PD array includes the N5 first PD networks and N7 third PD networks. N7 is a positive integer greater than or equal to 1 and less than N5. There is at least one first PD network between each of the N7 third PD networks and a central point of an optical receiving region in which the any first PD array is located. It may also be understood that the N7 third PD networks are all located at an edge of the optical receiving region in which the any first PD array is located. A quantity of PDs included in each of the N7 second PD networks is greater than the first threshold. All the PDs included in each of the N7 third PD networks are connected in series and form a broken-line structure with an unfixed extension direction. A part of the PDs included in each third PD network are connected in series and form a broken-line structure with an unfixed extension direction. In addition, none of the N7 third PD networks includes a zigzag line structure. As shown in FIG. 19, a first PD array provided in an optical receiving region 103 may further include one third PD network. The third PD network is located at an edge of the optical receiving region 103, and the third PD network does not include a zigzag line structure.

It should be additionally noted that N7 third PD networks included in any first PD array are independent of each other. In an actual implementation, an output end of each third PD network may be connected to one second controllable switching device, and output of each third PD network may be flexibly controlled via each second controllable switching device.

In the foregoing implementation, a part of PDs in a first PD array that are located at an edge of an optical receiving region and that cannot form an integer quantity of first PD networks are connected in series to form a special third PD network. In this way, the first PD array can include a plurality of same or different PD networks, to ensure receiving performance of the photoreceiver 100.

Further, when the any first PD array includes N5 first PD networks and N7 third PD networks, during actual operation, the N5 first PD networks included in the any first PD array may be configured to convert received optical energy into N5 fifth electrical parameters and output the N5 fifth electrical parameters, and the N7 third PD networks included in the any first PD may be configured to convert received optical energy into N7 seventh electrical parameters and output the N7 seventh electrical parameters. In other words, when a light spot of the first signal light falls on the any first PD array, the N5 first PD networks may output the N5 fifth electrical parameters, and the N7 second PD networks may output the N7 seventh electrical parameters. A first electrical parameter output by the any first PD array is obtained by superposing the N5 fifth electrical parameters output by the N5 first PD networks included in the any first PD array and the N7 seventh electrical parameters output by the N7 third PD networks included in the any first PD array.

It should be understood that the foregoing describes cases in which one first PD array includes a plurality of first PD networks and one or more second PD networks, and one first PD array includes a plurality of first PD networks and one or more third PD networks. In an actual implementation, one first PD array may include a plurality of first PD networks, one or more second PD networks, and one or more third PD networks. This is not specifically limited in this application.

It should be noted that the controllable switching device in this application may be specifically a mechanical switch, a controllable switching transistor, or another form of electronic device that can be controlled by a controller to be turned on or off. A specific type of a controllable switch is not limited in this application. For example, the controllable switching transistor may be a gate turn-off thyristor, a power transistor, or a power field-effect transistor. The controller in this application may be specifically a device having a data processing and control function in any form, for example, a CPU, a general-purpose processor, a DSP, an ASIC, an FPGA, another programmable logic device, a transistor logic device, a hardware component, or any combination thereof.

An embodiment of this application further provides an optical receiver. FIG. 20 is a diagram of a structure of an optical receiver according to this application. As shown in FIG. 20, the optical receiver 200 may include the foregoing photoreceiver 100 and a signal processing module 300. The signal processing module 300 is connected to the photoreceiver 100.

During actual operation, the photoreceiver 100 may be configured to receive first signal light via N2 target first PD arrays in the N1 first PD arrays included in the photoreceiver 100, and output N2 eighth electrical parameters. N2 is a positive integer greater than or equal to 1 and less than N1. The signal processing module 300 may be configured to process the N2 eighth electrical parameters to obtain to-be-transmitted data carried on the first signal light.

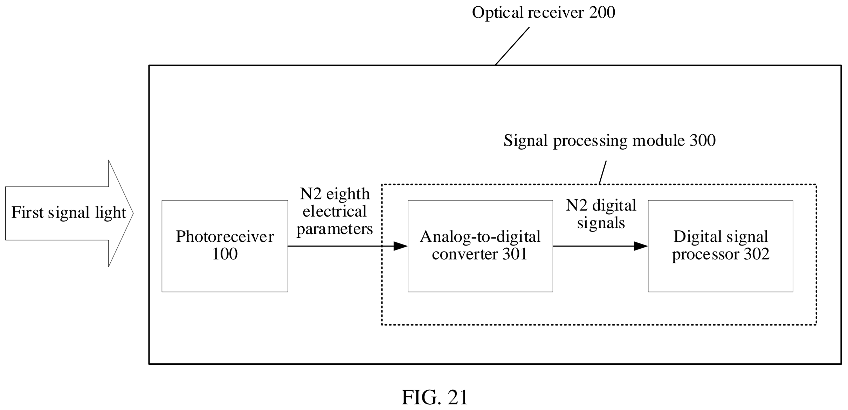

In an optional implementation, FIG. 21 is a diagram of another structure of an optical receiver according to this application. As shown in FIG. 21, the signal processing module 300 may include an analog-to-digital converter 301 and a digital signal processor 302. The photoreceiver 100 is connected to the digital signal processor 302 through the analog-to-digital converter 301.

During actual operation, the analog-to-digital converter 301 is configured to perform analog-to-digital conversion on the N2 eighth electrical parameters output by the photoreceiver 100, to obtain N2 digital signals. The digital signal processor 302 is configured to process the N2 digital signals to obtain the to-be-transmitted data.

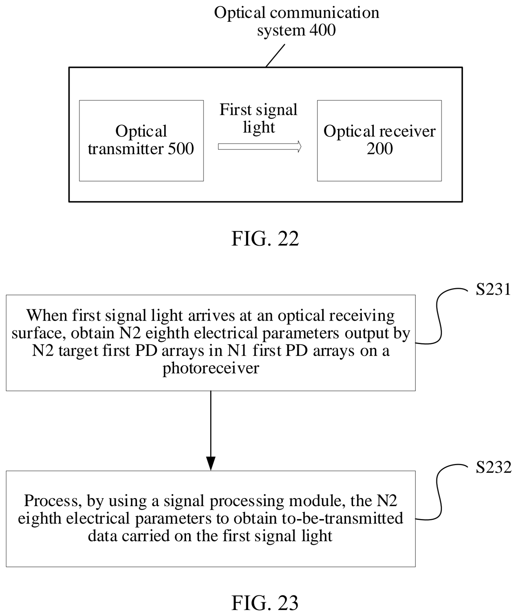

An embodiment of this application further provides an optical communication system. FIG. 22 is a diagram of a structure of an optical communication system according to this application. As shown in FIG. 22, the optical communication system 400 may include the foregoing optical receiver 200 and an optical transmitter 500. During actual operation, the optical transmitter 500 is configured to transmit first signal light that carries to-be-transmitted data. The optical receiver 200 is configured to receive the first signal light, and process the first signal light to obtain the to-be-transmitted data.

An embodiment of this application further provides an optical receiving method. The method is applicable to the foregoing optical receiver 200. For a specific structure and a function of the optical receiver 200, refer to the foregoing corresponding descriptions. Details are not described herein again. FIG. 23 is a schematic flowchart of an optical receiving method according to this application. As shown in FIG. 23, the method may include the following steps.

S231: When first signal light arrives at an optical receiving surface, obtain N2 eighth electrical parameters output by N2 target first PD arrays in N1 first PD arrays on a photoreceiver.

In some feasible implementations, when an optical receiver 200 determines that the first signal light has arrived at the optical receiving surface 10, the optical receiver 200 may obtain the N2 eighth electrical parameters that are generated by the N2 target first PD arrays in the N1 first PD arrays and that are output by the photoreceiver 100. For a specific process of obtaining the N2 eighth electrical parameters generated by the N2 target first PD arrays, refer to the foregoing descriptions of a function of the photoreceiver 100. Details are not described herein again.

Optionally, before obtaining the N2 eighth electrical parameters, when the optical receiver 200 determines that the first signal light has arrived at the optical receiving surface 10, the optical receiver 200 may sequentially obtain, via the photoreceiver 100, eighth electrical parameters output by the N1 first PD arrays. When it is determined, via the photoreceiver 100, that a value of an eighth electrical parameter output by any first PD array in the N1 first PD arrays is greater than or equal to a preset electrical parameter value, the any first PD array and N2-1 first PD arrays surrounding the any first PD array may be determined as the N2 target first PD arrays, and the photoreceiver 100 is controlled to output only the N2 eighth electrical parameters.

S232: Process, by using a signal processing module, the N2 eighth electrical parameters to obtain to-be-transmitted data carried on the first signal light.

In some feasible implementations, after obtaining the N2 eighth electrical parameters, the optical receiver 200 may process, by using a signal processing module 300, the N2 eighth electrical parameters, to obtain the to-be-transmitted data carried on the first signal light. In a specific implementation, the optical receiver 200 may perform analog-to-digital conversion on the N2 eighth electrical parameters via an analog-to-digital converter 301 in the signal processing module 300, to obtain N2 digital signals. Then, the optical receiver 200 may process the N2 digital signals via a digital signal processor 302 in the signal processing module 300, to obtain the to-be-transmitted data.

The optical receiving method provided in this application is implemented based on the optical receiver 200. The optical receiver 200 uses the photoreceiver 100 with a large communication bandwidth provided in this application, so that applicability and practicability of the optical receiving method provided in this application are improved.

In embodiments provided in this application, it should be understood that the disclosed system, apparatus, or method may be implemented in other manners. For example, the described apparatus embodiments are merely examples. For example, division into the units is merely logical function division. There may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

In the specification, the claims, and the accompanying drawings of this application, terms such as "first", "second", "third", and "fourth" are intended to distinguish between different objects but do not indicate a particular order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a specific feature, structure, or characteristic described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, or improvement, or the like made based on the technical solutions of this application shall fall within the protection scope of this application.

**Claims**

1. A photoreceiver, wherein the photoreceiver comprises an optical receiving surface and N1 first photoelectric detector PD arrays provided on the optical receiving surface, wherein

   the optical receiving surface comprises N1 optical receiving regions, the N1 first PD arrays are respectively provided in the N1 optical receiving regions, and each of the N1 first PD arrays comprises a plurality of connected PDs; any optical receiving region in the N1 optical receiving regions is in a shape of an axisymmetric curved quadrangle, an axisymmetric curved pentagon, an axisymmetric curved hexagon, a sphere, or an ellipsoid, the any optical receiving region is in a shape of an axisymmetric quadrangle, an axisymmetric pentagon, or an axisymmetric hexagon, or the any optical receiving region is in a shape of a distorted axisymmetric quadrangle or a distorted axisymmetric hexagon; and N1 is a positive integer greater than or equal to 2; and
   each of the N1 first PD arrays is configured to perform, via a plurality of comprised PDs, photoelectric conversion on received optical energy, and output a first electrical parameter obtained through the conversion.

2. The photoreceiver according to claim 1, wherein the optical receiving surface is a continuous quadric surface, each of the N1 optical receiving regions is in a shape of an axisymmetric curved pentagon, and N1 is greater than or equal to 6; or
   each of the N1 optical receiving regions is in a shape of an axisymmetric curved hexagon, and N1 is greater than or equal to 7.

3. The photoreceiver according to claim 1, wherein the optical receiving surface is a continuous quadric surface, the N1 optical receiving regions comprise M1 first optical receiving regions and M2 second optical receiving regions, each of the M1 first optical receiving regions is in a shape of an axisymmetric curved pentagon, each of the M2 second optical receiving regions is in a shape of an axisymmetric curved hexagon, M1 is a positive integer greater than or equal to 1, and M2 is a positive integer greater than or equal to 5.

4. The photoreceiver according to claim 1, wherein the optical receiving surface is a continuous quadric surface, the N1 optical receiving regions comprise one third optical receiving region and M3 fourth optical receiving regions, an optical axis of the optical receiving surface passes through the third optical receiving region, the third optical receiving region is in a shape of a sphere or an ellipsoid, each of the M3 fourth optical receiving regions is in a shape of a curved quadrangle, and M3 is a positive integer greater than or equal to 2.

5. The photoreceiver according to claim 4, wherein M3 is greater than or equal to 5, the M3 fourth optical receiving regions form at least two curved annular regions around the optical axis, each of the at least two curved annular regions comprises at least two fourth optical receiving regions, an inner edge of one of the at least two curved annular regions is connected to an edge of the third optical receiving region, and in any two connected curved annular regions in the at least two curved annular regions, a quantity of fourth optical receiving regions comprised in a curved annular region close to the third optical receiving region is less than a quantity of fourth optical receiving regions comprised in a curved annular region far from the third optical receiving region.

6. The photoreceiver according to claim 1, wherein the optical receiving surface is a stitched curved surface and is formed by stitching N1 first planes, one of the N1 first planes is one of the N1 optical receiving regions, and any optical receiving region in the N1 optical receiving regions is in a shape of an axisymmetric quadrangle, an axisymmetric pentagon, or an axisymmetric hexagon.

7. The photoreceiver according to claim 1, wherein the optical receiving surface is a second plane, and each of the N1 optical receiving regions is in a shape of an axisymmetric quadrangle; or
each of the N1 optical receiving regions is in a shape of an axisymmetric hexagon.

8. The photoreceiver according to claim 1, wherein the optical receiving surface is a distorted plane, and each of the N1 optical receiving regions is in a shape of a distorted axisymmetric quadrangle, or each of the N1 optical receiving regions is in a shape of a distorted axisymmetric hexagon; and

the N1 optical receiving regions are centrosymmetric about an optical axis of the optical receiving surface, an area difference between an optical receiving region i in the N1 optical receiving regions and a central optical receiving region in the N1 optical receiving regions is less than an area difference between an optical receiving region j and the central optical receiving region in the N1 optical receiving regions, the central optical receiving region is an optical receiving region through which the optical axis of the optical receiving surface passes, and a distance between the optical receiving region i and the central optical receiving region is less than a distance between the optical receiving region j and the central optical receiving region.

9. The photoreceiver according to claim 8, wherein the distorted plane is obtained through distortion on a third plane, the third plane comprises N1 fifth optical receiving regions, each of the N1 fifth optical receiving regions is in a shape of an axisymmetric hexagon or an axisymmetric quadrangle, and one of the N1 optical receiving regions is obtained through distortion on one of the N1 fifth optical receiving regions.

10. The photoreceiver according to claim 8 or 9, wherein the optical receiving surface is obtained through barrel distortion or pincushion distortion on the third plane.

11. The photoreceiver according to any one of claims 1 to 10, wherein each of the N1 optical receiving regions comprises N3 first optical receiving sub-regions, a first PD array provided in each optical receiving region comprises N3 second PD arrays, one second PD array is provided in one first optical receiving sub-region, and N3 is a positive integer greater than or equal to 2.

12. The photoreceiver according to claim 11, wherein a difference between N3 and $\sqrt[3]{X}$ is less than or equal to a preset difference, and X is a total quantity of PDs comprised in the N1 first PD arrays.

13. The photoreceiver according to claim 11 or 12, wherein when the optical receiving surface is a continuous quadric surface, each of the N3 first optical receiving sub-regions is in a shape of an axisymmetric curved quadrangle or an axisymmetric curved hexagon;

when the optical receiving surface is a stitched curved surface or a second plane, each of the N3 first optical receiving sub-regions is in a shape of an axisymmetric quadrangle or an axisymmetric hexagon; or
when the optical receiving surface is a distorted plane, each of the N3 first optical receiving sub-regions is in a shape of a distorted axisymmetric quadrangle or a distorted axisymmetric hexagon.

14. The photoreceiver according to any one of claims 11 to 13, wherein the N3 second PD arrays comprised in each first PD array are configured to convert received optical energy into N3 second electrical parameters and output the N3 second electrical parameters, and the first electrical parameter output by each first PD array comprises the N3 second electrical parameters output by the N3 second PD arrays comprised in each first PD array.

15. The photoreceiver according to any one of claims 11 to 14, wherein each optical receiving region further comprises N4 second optical receiving sub-regions, a sum of areas of the N3 first optical receiving sub-regions and the N4 second optical receiving sub-regions comprised in each optical receiving region is equal to an area of each optical receiving region, a part of an edge of each of the N4 second optical receiving sub-regions is connected to a part of an edge of each optical receiving region, each second optical receiving sub-region is in an irregular shape that is different from a shape of each first optical receiving sub-region, N4 third PD arrays are provided in the N4 second optical receiving sub-regions, and N4 is a positive integer greater than or equal to 1 and less than N3.

16. The photoreceiver according to claim 15, wherein the N3 second PD arrays comprised in each first PD array are configured to convert received optical energy into the N3 second electrical parameters and output the N3 second electrical parameters, the N4 third PD arrays comprised in each first PD array are configured to convert received optical energy into N4 third electrical parameters and output the N4 third electrical parameters, the first electrical parameter output by each first PD array comprises the N3 second electrical parameters output by the N3 second PD arrays comprised in each first PD array and the N4 third electrical parameters output by the N4 third PD arrays comprised in each first PD array.

17. The photoreceiver according to any one of claims 1 to 10, wherein any first PD array in the N1 first PD arrays comprises N5 first PD networks, all PDs in each of the N5 first PD networks are connected in series and form a zigzag line structure, an extension direction of the zigzag line structure formed by each first PD network is fixed and parallel to one symmetry axis of an optical receiving region in which the any first PD array is located, a quantity of PDs comprised in each first PD network is greater than or equal to a first threshold, and N5 is a positive integer greater than or equal to 2.

18. The photoreceiver according to claim 17, wherein any three adjacent PDs in the zigzag line structure formed by each first PD network are arranged in an isosceles triangle, or any four adjacent PDs in the zigzag line structure formed by each first PD network are arranged in a rectangle.

19. The photoreceiver according to claim 17 or 18, wherein the N5 first PD networks comprised in the any first PD array in the N1 first PD arrays are configured to convert received optical energy into N5 fifth electrical parameters and output the N5 fifth electrical parameters, and a first electrical parameter output by the any first PD array is obtained by superposing the N5 fifth electrical parameters output by the N5 first PD networks comprised in the any first PD array.

20. The photoreceiver according to claim 17 or 18, wherein the any first PD array further comprises N6 second PD networks, there is at least one first PD network between each of the N6 second PD networks and a central point of the optical receiving region in which the any first PD array is located, a quantity of PDs comprised in each of the N6 second PD networks is greater than the first threshold, all PDs comprised in each second PD network are connected in series and form a broken-line structure with an unfixed extension direction, a part of PDs comprised in each second PD network are connected in series and form a zigzag line structure, an extension direction of the formed zigzag line structure is parallel to the symmetry axis of the optical receiving region in which the any first PD array is located, and N6 is a positive integer greater than or equal to 1 and less than N5.

21. The photoreceiver according to claim 20, wherein the N5 first PD networks comprised in the any first PD array in the N1 first PD arrays are configured to convert received optical energy into the N5 fifth electrical parameters and output the N5 fifth electrical parameters, N6 second PD networks comprised in the any first PD are configured to convert received optical energy into N6 sixth electrical parameters and output the N6 sixth electrical parameters, and a first electrical parameter output by the any first PD array is obtained by superposing the N5 fifth electrical parameters output by the N5 first PD networks comprised in the any first PD array and the N6 sixth electrical parameters output by the N6 second PD networks comprised in the any first PD array.

22. The photoreceiver according to claim 17 or 18, wherein the any first PD array further comprises N7 third PD networks, there is at least one first PD network between each of the N7 third PD networks and a central point of the optical receiving region in which the any first PD array is located, a quantity of PDs comprised in each of the N7 third PD networks is greater than the first threshold, all PDs comprised in each third PD network are connected in series and form a broken-line structure with an unfixed extension direction, and N7 is a positive integer greater than or equal to 1 and less than N5.

23. The photoreceiver according to claim 22, wherein the N5 first PD networks comprised in the any first PD array in the N1 first PDs are configured to convert received optical energy into N5 fifth electrical parameters, and the N7 third PD networks comprised in the any first PD array are configured to convert received optical energy into N7 seventh electrical parameters, a first electrical parameter output by the any first PD array is obtained by superposing the N5 fifth electrical parameters output by the N5 first PD networks comprised in the any first PD array and the N7 seventh electrical parameters output by the N7 third PD networks comprised in the any first PD array.

24. The photoreceiver according to any one of claims 1 to 23, wherein the photoreceiver further comprises an output control module, and the output control module is separately connected to the N1 first PD arrays;

when first signal light is incident to the photoreceiver, the output control module is configured to amplify the first electrical parameter output by each of the N1 first PD arrays, to obtain N1 eighth electrical parameters; and
the output control module is further configured to determine N2 target first PD arrays from the N1 first PD arrays based on the N1 eighth electrical parameters, and output an eighth electrical parameter corresponding to each of the N2 target first PD arrays.

25. An optical receiver, wherein the optical receiver comprises a signal processing module and the photoreceiver according to any one of claims 1 to 24, wherein the signal processing module is connected to the photoreceiver;

the photoreceiver is configured to receive first signal light via N2 target first PD arrays in the N1 first PD arrays, and output N2 eighth electrical parameters, wherein N2 is a positive integer greater than or equal to 1 and less than N1; and
the signal processing module is configured to process the N2 eighth electrical parameters to obtain to-be-transmitted data carried on the first signal light.

26. The optical receiver according to claim 25, wherein the signal processing module comprises an analog-to-digital converter and a digital signal processor, wherein

the analog-to-digital converter is configured to perform analog-to-digital conversion on the N2 eighth electrical parameters to obtain N2 digital signals; and
the digital signal processor is configured to process the N2 digital signals to obtain the to-be-transmitted data.

27. An optical communication system, wherein the optical communication system comprises an optical transmitter and the optical receiver according to claim 25 or 26.

28. An optical receiving method, wherein the optical receiving method is applied to an optical receiver, the optical receiver comprises a photoreceiver and a signal processing module, and the photoreceiver comprises an optical receiving surface and N1 first photoelectric detector PD arrays provided on the optical receiving surface, wherein the optical receiving surface comprises N1 optical receiving regions, the N1 first PD arrays are separately embedded in the N1 optical receiving regions, and each first PD array comprises a plurality of PDs; any optical receiving region in the N1 optical receiving regions is in a shape of one of an axisymmetric curved quadrangle, an axisymmetric curved pentagon, an axisymmetric curved hexagon, a circle, or an ellipse, the any optical receiving region is in a shape of one of an axisymmetric quadrangle, an axisymmetric pentagon, or an axisymmetric hexagon, or the any optical receiving region is in a shape of one of a distorted axisymmetric quadrangle or a distorted axisymmetric hexagon; and N1 is a positive integer greater than or equal to 2; and the method comprises:

when first signal light arrives at the optical receiving surface, obtaining N2 eighth electrical parameters output by N2 target first PD arrays in the N1 first PD arrays on the photoreceiver, wherein N2 is a positive integer greater than or equal to 1 and less than N1; and
processing, by using the signal processing module, the N2 eighth electrical parameters to obtain to-be-transmitted data carried on the first signal light.

29. The method according to claim 28, wherein the method further comprises:

sequentially obtaining eighth electrical parameters output by the N1 first PD arrays; and

when it is determined that a value of an eighth electrical parameter output by any first PD array in the N1 first PD arrays is greater than or equal to a preset electrical parameter value, determining the any first PD array and N2-1 first PD arrays surrounding the any first PD array as the N2 target first PD arrays.

Photoreceiver 100

Optical receiving surface 10

One PD

One first PD array

N1 optical receiving regions

One first PD array

One first electrical parameter

(a)

One first PD array

One optical receiving region

Optical receiving surface 10

One first electrical parameter

(b)

FIG. 1

Optical receiving region 101

One PD

First PD array 102

One first electrical parameter

FIG. 2

FIG. 3

FIG. 4

One first optical
receiving region

One second optical
receiving region

Optical receiving
surface 10

FIG. 5

Optical axis of the optical
receiving surface 10

Optical receiving
surface 10

One fourth
optical receiving
region

One third optical
receiving region

(a)

(b)

FIG. 6

Annular region k1

Optical receiving
surface 10

One fourth
optical
receiving region

Annular region k2

Third optical
receiving region

FIG. 7

Optical receiving surface 10

One first plane/One optical receiving region

FIG. 8

Optical receiving surface 10

One optical receiving region

FIG. 9

Optical receiving surface 10

One optical receiving region

FIG. 10

Optical
receiving
surface 10

One optical
receiving region

Optical axis of the
optical receiving
surface 10

Optical
receiving
region i

Central optical
receiving region

Optical
receiving
region i

**FIG. 11**

Optical
receiving
surface 10

One optical
receiving region

Optical axis of the
optical receiving
surface 10

Optical
receiving
region i

Central optical
receiving region

Optical
receiving
region j

**FIG. 12**

Third
plane

One fifth optical
receiving region

Optical
receiving
surface 10

One optical
receiving region

Distortion

Optical axis of the
optical receiving
surface 10

Central optical
receiving region

Optical axis of
the third plane

**FIG. 13**

Third plane

One fifth optical receiving region

Optical receiving surface 10

One optical receiving region

Optical axis of the optical receiving surface 10

Central optical receiving region

Distortion

Optical axis of the third plane

**FIG. 14**

First optical receiving sub-region 1021

Second PD array 1022

Optical receiving region 102

Optical receiving surface 10

One PD

One first PD array

**FIG. 15**

First optical receiving sub-region 1021

Second PD array 1022

Optical receiving region 102

Second optical receiving sub-region 1023

Third PD array 1024

**FIG. 16**

One symmetry axis of
the optical receiving
region 103

First PD
network 1032

PD

Optical
receiving
region 103

First PD
array 1031

Part of a
zigzag line
structure

Extension
direction

**FIG. 17**

Any first
PD network

Any first
PD network

Any three
adjacent PDs
distributed in an
isosceles triangle

Any four adjacent
PDs distributed in
a rectangle

(a)

(b)

**FIG. 18**

One symmetry axis of
the optical receiving
region 103

Zigzag line
structure

PD

Optical
receiving region
103

Second PD
network

Third PD
network

Extension
direction

FIG. 19

Optical receiver 200

First signal light

Photoreceiver
100

N2 eighth
electrical
parameters

Signal
processing
module 300

FIG. 20

EP 4 686 116 A1

Optical receiver 200

Signal processing module 300

First signal light

Photoreceiver
100

N2 eighth
electrical
parameters

Analog-to-digital
converter 301

N2 digital
signals

Digital signal
processor 302

FIG. 21

Optical communication
system 400

```
┌─────────────────────────────────────────────────────────────┐
│                                                               │
│   ┌─────────────┐    First signal    ┌─────────────────┐      │
│   │             │        light       │                 │      │
│   │   Optical   │                     │ Optical receiver│      │
│   │ transmitter │     ═══════════▷    │       200       │      │
│   │     500     │                     │                 │      │
│   └─────────────┘                     └─────────────────┘      │
│                                                               │
└─────────────────────────────────────────────────────────────┘
```

## FIG. 22

When first signal light arrives at an optical receiving surface, obtain N2 eighth electrical parameters output by N2 target first PD arrays in N1 first PD arrays on a photoreceiver ⌇ S231

Process, by using a signal processing module, the N2 eighth electrical parameters to obtain to-be-transmitted data carried on the first signal light ⌇ S232

## FIG. 23

## INTERNATIONAL SEARCH REPORT

| International application No. |
|---|
| **PCT/CN2023/086189** |

### A. CLASSIFICATION OF SUBJECT MATTER

H04B 10/60(2013.01)i

According to International Patent Classification (IPC) or to both national classification and IPC

### B. FIELDS SEARCHED

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

3GPP, CJFD, CNTXT, ENTXTC, VE: 通信感知一体化, 无线光通信, optical wireless communication, OWC, 光接收, 阵列, 子阵, 光电二极管, 轴对称, 图形, 探测器, 曲面, 电参量, 输出, 曲折线, integrated sensing and communication, ISAC, PD, optical reception, array, sub array, photodiode, axial symmetry, figure, detector, curved surface, electric parametric, output, meander line

### C. DOCUMENTS CONSIDERED TO BE RELEVANT

| Category* | Citation of document, with indication, where appropriate, of the relevant passages | Relevant to claim No. |
|---|---|---|
| A | WO 2023038459 A1 (SAMSUNG ELECTRONICS CO., LTD.) 16 March 2023 (2023-03-16) description, paragraphs [0069]-[0079] | 1-29 |
| A | CN 111198362 A (INFINEON TECHNOLOGIES AG) 26 May 2020 (2020-05-26) entire document | 1-29 |
| A | WO 2022253330 A1 (HUAWEI TECHNOLOGIES CO., LTD.) 08 December 2022 (2022-12-08) entire document | 1-29 |
| A | US 2021190998 A1 (ARIZONA BOARD OF REGENTS ON BEHALF OF THE UNIVERSITY OF ARIZONA) 24 June 2021 (2021-06-24) entire document | 1-29 |
| A | CN 104613995 A (YASKAWA ELECTRIC CORP.) 13 May 2015 (2015-05-13) entire document | 1-29 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/086189**

| Patent document cited in search report | | | Publication date (day/month/year) | Patent family member(s) | | | Publication date (day/month/year) |
|---|---|---|---|---|---|---|---|
| WO | 2023038459 | A1 | 16 March 2023 | KR | 20230037382 | A | 16 March 2023 |
| CN | 111198362 | A | 26 May 2020 | DE | 102019130647 | A1 | 20 May 2020 |
| | | | | KR | 20200059159 | A | 28 May 2020 |
| | | | | US | 2020158832 | A1 | 21 May 2020 |
| WO | 2022253330 | A1 | 08 December 2022 | CN | 115441955 | A | 06 December 2022 |
| US | 2021190998 | A1 | 24 June 2021 | WO | 2020006411 | A1 | 02 January 2020 |
| CN | 104613995 | A | 13 May 2015 | US | 2015122980 | A1 | 07 May 2015 |
| | | | | JP | 2015090304 | A | 11 May 2015 |

Form PCT/ISA/210 (patent family annex) (July 2022)